# EUROPEAN PATENT APPLICATION

(11) **EP 4 794 342 A1**
(43) Date of publication of application: **19.08.2026**
(21) Application number: 24883878.1
(22) Date of filing: 21.05.2024
(51) Int. Cl.: H04N 21/442

(54) **DATA PROCESSING METHOD AND RELATED DEVICE**

(30) Priority: 03.11.2023 CN 202311462046
(71) Applicant: HUAWEI TECHNOLOGIES CO., LTD., Shenzhen 518129 (CN)
(72) Inventor: HU, Ziyuan, Shenzhen, Guangdong 518129 (CN); ZHOU, Haibo, Shenzhen, Guangdong 518129 (CN); KANG, Xin, Shenzhen, Guangdong 518129 (CN)
(74) Representative: Pfenning, Meinig & Partner mbB
(86) International application number: PCT/CN2024/094525
(87) International publication number: WO 2025/091865

(57) **Abstract**

A data processing method is provided, and relates to the field of media applications. The method includes: obtaining a profile statement, where the profile statement indicates a trustworthiness level requirement that a media asset needs to satisfy; and generating a trust profile based on the profile statement, where the trust profile includes the profile statement, the profile statement includes a formula or an expression, the formula or the expression indicates a requirement of a trust indicator in a trust credential, and the trust indicator is a parameter indicating a trustworthiness level of the media asset. The trustworthiness level requirement of the media asset is recorded in the trust profile, which can help a platform, an organization, or a user manage the media asset. The trustworthiness level of the media asset is assessed by using the trust profile. Delivery of the trust profile helps the platform and the user verify the trustworthiness level of the media asset.

## Description

### TECHNICAL FIELD

This application relates to the fields of terminals and media applications, and in particular, to a data processing method and a related device.

### BACKGROUND

With popularization of more convenient photographing devices such as mobile phones and development of various simple, efficient, and powerful content editing software (for example, AIGC-type software), a threshold for people to create and modify media is increasingly low, and people can release the media on various social software. However, modifications to media content exacerbate spread of some misinformation and false information, and undermines trustworthiness of the media content as an information carrier. Especially with development of AI technologies, it is difficult for eyes to distinguish between generated fake content and authentic content, and seeing is not always "believing". Therefore, a technology that can help people determine a trustworthiness level of content more effectively is critical.

An example in which the media content is an image is used. In an existing implementation, to detect whether the media content includes fake content, an AI detection model may be trained by using a large quantity of authentic image sets and fake image sets. The detection model detects whether an input image includes a feature similar to that of the fake image, to determine whether the image is trustworthy. However, this AI detection model can prove only a trustworthiness level of a part of specific fake content.

Therefore, a method that can provide a trustworthiness level proof for media content is urgently needed.

### SUMMARY

According to a first aspect, this application provides a data processing method. The method includes: determining whether one or more trust indicators of a media asset correspond to a metric requirement to obtain trustworthiness information of the media asset. A user may determine a trustworthiness level of the media asset based on the trustworthiness information. The media asset includes media content, and the media asset further includes at least one of metadata of the media content and a trust record of the media content. The trust indicator is a parameter indicating the trustworthiness level of the media asset.

In a possible implementation, the method further includes: generating the trustworthiness information of the media asset.

In a possible implementation, the trustworthiness information may be encapsulated into a trust report.

In a possible implementation, the one or more trust indicators are determined based on at least one of the media content, the metadata corresponding to the media content, and the trust record corresponding to the media content. For example, the one or more trust indicators may be features extracted from the media content, the metadata corresponding to the media content, and the trust record corresponding to the media content, or may be data obtained after specific processing is performed on the media content, the metadata corresponding to the media content, and the trust record corresponding to the media content.

In a possible implementation, the trustworthiness information indicates whether the one or more trust indicators satisfy a metric, and the trust indicator includes a parameter indicating the trustworthiness level of the media asset. An example in which the media content is an image is used. Features such as shooting time, a shooting location, a photographer, a camera lens parameter, and a shooting parameter in the metadata may be selected as trust indicators of the metadata.

An example in which the media content is an image is used. An image generation manner, an image editing manner, and the like in the trust record may be selected as trust indicators of the trust record. The image generation manner may include but is not limited to whether the media content is generated through AIGC, whether the media content is generated through a camera, whether the media content is generated with software assistance, whether the media content is generated through synthetic media, and whether the media content can be used to train a model. The image editing manner may include but is not limited to rotation, resizing, cropping, content editing, and the like.

An example in which the media content is an image is used. Features such as a person, a scene, an object type, a position relationship between objects, or an image style (for example, color, lighting, or luminance) in the media content may be selected as trust indicators of the media content.

In a possible implementation, a metric corresponding to the trust indicator is specified in a profile, and first trust profile information may be obtained. The first trust profile information includes a metric that the media asset needs to satisfy.

In a possible implementation, the one or more trust indicators of the media asset may be determined based on the media content, and at least one of the metadata corresponding to the media content and the trust record corresponding to the media content.

In a possible implementation, the one or more trust indicators may be encapsulated in a trust credential.

In a possible implementation, the method further includes: adding, to the trust record, trustworthiness information obtained by determining whether each trust indicator satisfies the metric.

Trustworthiness of the media asset can be further enhanced by adding the newly generated trustworthiness information to the trust record of the media asset.

In a possible implementation, determining whether the one or more trust indicators satisfy the metric includes: determining whether a trust indicator in the metric is included in the one or more trust indicators, or determining whether the one or more trust indicators include a trust indicator in the metric.

In other words, the metric may also include a trust indicator, and whether the trust indicator of the media asset is included in the metric (that is, whether the metric includes the trust indicator of the media asset) may be determined to determine whether the trust indicator of the media asset satisfies the metric.

In a possible implementation, the trust record includes a trust manifest; and adding the trustworthiness information to the trust record includes: adding the trustworthiness information to the trust manifest.

In a possible implementation, the method further includes: adding a hash value and a signature of the trustworthiness information to the trust manifest.

In a possible implementation, the method further includes: obtaining indication information of the media asset; and adding to the trust record includes: adding, based on the indication information, the trustworthiness information to the trust record corresponding to the media asset indicated by the indication information. When trustworthiness information of a plurality of media assets needs to be processed in batches, indication information of the media assets may be transmitted in the process.

In a possible implementation, the method further includes: generating, based on the trustworthiness information, a file associated with the media asset.

In a possible implementation, the first trust profile information includes one of a plurality of pieces of trust profile information, and different pieces of trust profile information indicate metric requirements, of different regions or users, that the media asset needs to satisfy. Different scenarios (for example, regions or users) may correspond to different requirements, and different pieces of trustworthiness information may be generated, so that trustworthiness assessment requirements of the different scenarios can be satisfied.

In a possible implementation, the action of obtaining the one or more trust indicators of the media asset is triggered by capturing the media content through a hardware sensor or generating the media content through generation software.

For example, an image may be captured through a camera built in a terminal device, or new media content may be generated through media content editing software (for example, through AIGC). When obtaining media content, the terminal device further needs to generate a corresponding media asset through a media asset management module, and the media asset may include metadata, a trust record, and the like. In this embodiment of this application, the media asset management module may capture the media content through a hardware sensor or generate the media content through generation software, generate trustworthiness information based on the content in the media asset, and add the trustworthiness information to the media asset.

In a possible implementation, before obtaining the one or more trust indicators of the media asset, the method further includes: receiving a trustworthiness assessment request for the media content.

For example, the user may input the trustworthiness assessment request for the media content through a trustworthiness assessment application.

For example, a device side may input the trustworthiness assessment request for the media content through an interface of a cloud service for providing a trustworthiness assessment service.

In a possible implementation, the media content is at least one of an image, a video, or audio.

According to a second aspect, this application provides a data processing method. The method includes: obtaining a media asset, where the media asset includes media content, and the media asset further includes at least one of metadata of the media content and a trust record of the media content; and determining one or more trust indicators of the media asset, where the one or more trust indicators are used to assess a trustworthiness level of the media asset.

As a result, a trustworthy indicator is extracted to assess the trustworthiness level of the media asset. During subsequent assessment of the trustworthiness level, the media asset does not need to be read, but only information needs to be read from the trustworthy indicator to assess the trustworthiness level of the media asset.

In a possible implementation, the one or more trust indicators are encapsulated in a trust credential.

In a possible implementation, the one or more trust indicators are determined based on at least one of the media content, the metadata corresponding to the media content, and the trust record corresponding to the media content.

In a possible implementation, one or more trust indicators TM related to the trustworthiness level of the media asset may be determined based on the metadata of the media content. For example, TM may be generation time of the media content, an author name of the media content, a digital content identifier of the media content, a generation location of the media content, information about a generation device of the media content, a media type (Media Type) of the media content, or a generation manner of the media content. For example, the information about the generation device of the media content may include a model of the device, a parameter of a camera, and the like; and the parameter of the camera may include a focal length, sensitivity, an exposure level, and the like of the camera during picture taking. It should be understood that TM may further include other information, for example, information used to describe the media content such as copyright information. This is not limited in this application.

In a possible implementation, one or more trust indicators TR related to the trustworthiness level of the media asset may be determined based on the trust record of the media content. For example, generation time of the media content, an author name of the media content, a digital content identifier of the media content, a generation location of the media content, information about a generation device of the media content, a media editing manner, a media type (Media Type) of the media content, or a generation manner of the media content in the trust record may be selected as the one or more trust indicators. For example, the information about the generation device of the media content may include a model of the device, a parameter of a camera, and the like; and the parameter of the camera may include a focal length, sensitivity, an exposure level, and the like of the camera during picture taking. It should be understood that TR may further include other information, for example, information used to describe the media content such as copyright information. This is not limited in this application. The media generation manner may include but is not limited to whether the media content is generated through AIGC, whether the media content is generated through a camera, whether the media content is generated with software assistance, whether the media content is generated through synthetic media, and whether the media content can be used to train a model. The media editing manner may include but is not limited to rotation, resizing, cropping, content editing, and the like. TR may further include a media assertion, and the media assertion may include a thumbnail, whether modification is allowed, an operation permission, a use permission, provenance of second media content, and the like.

In a possible implementation, one or more trust indicators TC related to the trustworthiness level of the media asset may be determined based on the media content. For example, features such as a person, a scene, an object type, a position relationship between objects, and a media style (for example, color, lighting, or luminance) in the media content may be selected as trust indicators of the media content.

In a possible implementation, the one or more trust indicators are used to determine trustworthiness information of the media asset, and the trustworthiness information indicates whether the one or more trust indicators satisfy a metric.

In a possible implementation, the metric includes data indicating a trust indicator that the media asset needs to satisfy. An example in which the metric indicates a creator is used, and the metric may be the creator or a name of the creator. An example in which the metric indicates a media generation location is used, and the metric may be the location or a name of the location. Examples are not listed herein.

In a possible implementation, the trust indicator includes a parameter indicating the trustworthiness level of the media asset.

In a possible implementation, the media content is at least one of an image, a video, or audio.

According to a third aspect, this application provides a data processing method. The method includes: obtaining first media content; and generating a modification record of the first media content, where a trust record of the first media content includes initial information of the first media content, a hard binding of the first media content, and a first digital signature, the first digital signature is a digital signature of first data, and the first data is data determined based on at least the initial information and the hard binding of the first media content. The trust record may be used for tracing provenance of the media content, and can help a user determine authenticity of the media content to some extent.

In a possible implementation, the first data is data obtained by combining at least the hard binding of the first media content and the initial information of the first media content, or the first data is data obtained by combining at least a hard binding of the initial information (for example, a hash value AIGC.Hash of AI-generated content AIGC, or a hash value Media Type.Hash of a media generation manner) and a hard binding of a first media hard binding (for example, a hash value Media Hash 0.Hash of a first media hash value).

In a possible implementation, the first data may alternatively be a first combined hash value (Hash(TD)), and the first combined hash value includes a hash value obtained by combining the initial information of the first media content and a first media hash value. For example, the first combined hash value includes a hash value obtained by combining the initial information of the first media content, the first media hash value, and other descriptive information. The other descriptive information may not be other descriptive information in the initial information, for example, information about a tool for generating a trust profile or other information describing the initial information of the first media content.

In a possible implementation, the first data may alternatively be a first combined hash value, and the first combined hash value may include a hash value obtained by combining a hash value of the initial information of the first media content and a hash value (Media Hash 0. Hash) of a first media hash value. For example, the first combined hash value is a hash value obtained by combining the hash value of the initial information of the first media content, the hash value of the first media hash value, and a hash value of other metadata information. Herein, when there are at least two pieces of initial information of the first media content, the hash value of the initial information of the first media content may include a hash value of each piece of initial information of the first media content, or the hash value of the initial information of the first media content may include a hash value obtained by combining all the pieces of initial information of the first media content.

In a possible implementation, the initial information of the media content may be information generated when the media content is generated. For example, the initial information of the media content includes at least one of the following: generation time of the media content, an author name of the media content, a digital content identifier of the media content, a generation location of the media content, information about a generation device of the media content, a resolution of the media content, a size of the media content, a media type (Media Type) of the media content, or a generation manner of the media content. For example, the information about the generation device of the media content may include a model of the device, a parameter of a camera, and the like; and the parameter of the camera may include a focal length, sensitivity, an exposure level, and the like of the camera during picture taking. It should be understood that the initial information of the media content may further include other information, for example, information used to describe the media content such as copyright information.

In a possible implementation, the media type may include but is not limited to an image type, a video type, an audio type, a graphics type, and the like. The generation manner may include an AI generation manner, a non-AI generation manner, and the like. In a possible manner, the generation manner in the initial information may be replaced with an AI-generated content (AIGC) identifier. For example, when the media content is generated by AI, a value of the AIGC identifier is 1; or when the media content is not generated by AI, a value of the AIGC identifier is 0. The author name of the media content may be a name of a creator of the media content or a name of a shooting device of the media content.

According to a fourth aspect, this application provides a data processing method. The method includes: obtaining a profile statement, where the profile statement indicates a trustworthiness level requirement that a media asset needs to satisfy; and generating a trust profile based on the profile statement, where the trust profile includes the profile statement, the profile statement includes a representation statement, the representation statement includes a formula or an expression, the formula or the expression indicates a requirement of a trust indicator in a trust credential, and the trust indicator is a parameter indicating a trustworthiness level of the media asset.

In a possible implementation, the formula or the expression is expressed in a format of a JSON formula.

In a possible implementation, the method further includes: obtaining metadata of the trust profile; and generating the trust profile further based on the metadata, where the trust profile further includes the metadata, and the metadata includes a name, an issuer, an issue date, and a version number of the trust profile.

In a possible implementation, the name, the issuer, and the version number of the trust profile are expressed in a string type in the trust profile.

In a possible implementation, the trust profile is expressed in a YAML format.

In a possible implementation, the media asset includes media content, the media asset further includes at least one of metadata of the media content and a trust record of the media content, and one or more trust indicators are determined based on at least one of the media content, the metadata corresponding to the media content, and the trust record corresponding to the media content.

In a possible implementation, the method further includes: receiving a request from a user, where the request is used to obtain the trust profile; and sending the trust profile to the user.

In a possible implementation, the method further includes: obtaining a target trust profile from a profile repository in response to the request of the user, where the profile repository includes a plurality of trust profiles, and the target profile is a trust profile corresponding to the user; and sending the trust profile to the user includes: sending the target trust profile to the user.

In a possible implementation, the method further includes: storing the trust profile.

According to a fifth aspect, this application provides a data processing method, including: obtaining a trust credential and a trust profile, where the trust credential indicates a trustworthiness level of a media asset, and the trust profile indicates a trustworthiness level requirement of the media asset; and generating a trust report based on the trust credential and the trust profile, where the trust report includes report metadata and a report statement, the report metadata records information describing the trust report, the report metadata includes information extracted from the trust profile, and the report statement includes a statement of whether the trust credential satisfies the trustworthiness level requirement in the trust profile.

In a possible implementation, the trust credential includes a trust indicator. The trust indicator is a parameter indicating the trustworthiness level of the media asset, the media asset includes media content, the media asset further includes at least one of metadata of the media content and a trust record of the media content, and the one or more trust indicators are determined based on at least one of the media content, the metadata corresponding to the media content, and the trust record corresponding to the media content.

In a possible implementation, the trust profile includes a representation statement. The representation statement includes a formula or an expression, and the formula or the expression indicates a requirement of the trust indicator in the trust credential.

Generating the trust report based on the trust credential and the trust profile according to the method includes:
reading the trust indicator from the trust credential, and reading the representation statement from the trust profile;
inputting the trust indicator of the trust credential into the formula or the expression of the representation statement to determine a conclusion about whether the trust indicator satisfies the trustworthiness level requirement; and
generating the trust report based on the conclusion about whether the trust indicator satisfies the trustworthiness level requirement.

In a possible implementation, the trust profile includes profile metadata. The profile metadata records information describing the trust profile, and the profile metadata includes a name, an issuer, an issue date, and a version number of the trust profile. Generating the trust report based on the trust profile includes:
extracting information from the profile metadata to generate the report metadata.

In a possible implementation, the method further includes: adding the trustworthy report to a trust record of the media asset to obtain a new trust record.

In a possible implementation, before generating the trust report, the method further includes: receiving a trustworthiness assessment request for the media asset.

In a possible implementation, after generating the trust report, the method further includes: storing and/or sending the trust report.

In a possible implementation, the media asset is at least one of an image, a video, or audio.

According to a sixth aspect, this application provides a data processing apparatus. The apparatus includes:
an obtaining module, configured to obtain one or more trust indicators of a media asset, where the media asset includes media content, and at least one of metadata corresponding to the media content and a trust record corresponding to the media content; and
a processing module, configured to determine whether the one or more trust indicators satisfy a metric.

In a possible implementation, the obtaining module is further configured to:
obtain first trust profile information, where the first trust profile information includes a metric that the media asset needs to satisfy.

In a possible implementation, the one or more trust indicators are determined based on at least one of the media content, the metadata corresponding to the media content, and the trust record corresponding to the media content.

In a possible implementation, the one or more trust indicators are encapsulated in a trust credential.

In a possible implementation, the metric includes data indicating a trust indicator that the media asset needs to satisfy.

In a possible implementation, the processing module is specifically configured to:
determine whether a corresponding trust indicator in the metric is included in the one or more trust indicators, or determine whether the one or more trust indicators include a corresponding trust indicator in the metric.

In a possible implementation, the processing module is further configured to:
generate trustworthiness information of the media asset, where the trustworthiness information indicates whether the one or more trust indicators satisfy the metric, and the trust indicator includes a parameter indicating a trustworthiness level of the media asset. In a possible implementation, the processing module is further configured to:
add the trustworthiness information to the trust record.

In a possible implementation, the trust record includes a trust manifest; and
the processing module is specifically configured to:
add the trustworthiness information to the trust manifest.

In a possible implementation, the obtaining module is further configured to:
obtain indication information of the media asset; and
the processing module is specifically configured to:
   add, based on the indication information, the trustworthiness information to the trust record corresponding to the media asset indicated by the indication information.

In a possible implementation, the trustworthiness information is encapsulated in a trust report.

In a possible implementation, the processing module is further configured to:
generate, based on the trustworthiness information, a file associated with the media asset.

In a possible implementation, the first trust profile information includes one of a plurality of pieces of trust profile information, and different pieces of trust profile information indicate metric requirements, of different regions or users, that the media asset needs to satisfy.

In a possible implementation, the action of obtaining the one or more trust indicators of the media asset is triggered by capturing the media content through a hardware sensor or generating the media content through generation software.

In a possible implementation, before obtaining a plurality of metrics and a profile of the media asset, the obtaining module is further configured to:
receive a trustworthiness assessment request for the media content.

In a possible implementation, the media content is at least one of an image, a video, or audio.

According to a seventh aspect, this application provides a data processing apparatus. The apparatus includes:
an obtaining module, configured to obtain a media asset, where the media asset includes media content, and at least one of metadata corresponding to the media content and a trust record corresponding to the media content; and
a processing module, configured to determine one or more trust indicators of the media asset, where the one or more trust indicators are used to assess a trustworthiness level of the media asset.

In a possible implementation, the one or more trust indicators are encapsulated in a trust credential.

In a possible implementation, the one or more trust indicators are determined based on at least one of the media content, the metadata corresponding to the media content, and the trust record corresponding to the media content.

In a possible implementation, the one or more trust indicators are used to determine trustworthiness information of the media asset, and the trustworthiness information indicates whether the one or more trust indicators satisfy a metric.

In a possible implementation, the metric includes a trust indicator that the media asset needs to satisfy.

In a possible implementation, the trust indicator includes a parameter indicating the trustworthiness level of the media asset.

In a possible implementation, the media content is at least one of an image, a video, or audio.

According to an eighth aspect, an embodiment of this application provides a data processing apparatus. The apparatus includes:
an obtaining module, configured to obtain first media content; and
a processing module, configured to generate a modification record of the first media content, where a trust record of the first media content includes initial information of the first media content, a hard binding of the first media content, and a first digital signature, the first digital signature is a digital signature of first data, and the first data is data determined based on at least the initial information and the hard binding of the first media content.

The modules in the data processing apparatus according to the eighth aspect of this application are further configured to perform the method in other possible implementations of the third aspect.

According to a ninth aspect, an embodiment of this application provides a data processing apparatus, including:
an obtaining module, configured to obtain a profile statement, where the profile statement indicates a trustworthiness level requirement that a media asset needs to satisfy; and
a processing module, configured to generate a trust profile based on the profile statement, where the trust profile includes the profile statement.

In an implementation, the processing module is further configured to receive a request from a user, where the request is used to obtain the trust profile; and
the processing module is further configured to send the trust profile to the user.

In an implementation, the obtaining module is further configured to obtain metadata of the trust profile; and
the processing module generates the trust profile further based on the metadata, where the trust profile further includes the metadata, and the metadata includes a name, an issuer, an issue date, and a version number of the trust profile.

The modules in the data processing apparatus according to the ninth aspect of this application are further configured to perform the method in other possible implementations of the fourth aspect.

According to a tenth aspect, an embodiment of this application provides a data processing apparatus, including:
an obtaining module, configured to obtain a trust credential and a trust profile, where the trust credential indicates a trustworthiness level of a media asset, and the trust profile indicates a trustworthiness level requirement of the media asset; and
a processing module, configured to generate a trust report based on the trust credential and the trust profile, where the trust report includes report metadata and a report statement, the report metadata records information describing the trust report, the report metadata includes information extracted from the trust profile, and the report statement includes a statement of whether the trust credential satisfies the trustworthiness level requirement in the trust profile.

In an implementation, the trust profile includes a representation statement. The representation statement includes a formula or an expression, and the formula or the expression indicates a requirement of the trust indicator in the trust credential. The processing module is further configured to: read the trust indicator from the trust credential, and read the representation statement from the trust profile; input the trust indicator of the trust credential into the formula or the expression of the representation statement to determine a conclusion about whether the trust indicator satisfies the trustworthiness level requirement; and generate the trust report based on the conclusion about whether the trust indicator satisfies the trustworthiness level requirement.

In an implementation, the trust profile includes profile metadata. The profile metadata records information describing the trust profile, and the profile metadata includes a name, an issuer, an issue date, and a version number of the trust profile. The processing module is further configured to extract information from the profile metadata to generate the report metadata.

In an implementation, the trust credential includes a trust indicator. The trust indicator is a parameter indicating the trustworthiness level of the media asset, the media asset includes media content, the media asset further includes at least one of metadata of the media content and a trust record of the media content, and the one or more trust indicators are determined based on at least one of the media content, the metadata corresponding to the media content, and the trust record corresponding to the media content.

In an implementation, the trustworthy report is added to the trust record of the media asset to obtain a new trust record.

The modules in the data processing apparatus according to the tenth aspect of this application are further configured to perform the method in other possible implementations of the fifth aspect.

According to an eleventh aspect, an embodiment of this application provides a data processing system, including:
a first device, configured to obtain a media asset;
a second device, configured to obtain one or more trust indicators of the media asset based on the media asset, where the first device and the second device may be same or different devices; and
a third device, configured to obtain a trust report generated based on the one or more trust indicators of the media asset and trust profile information. In a possible implementation, the one or more trust indicators of the media asset are recorded in a trust credential. In a possible implementation, the second device sends the one or more trust indicators of the media asset to the third device in response to a request from the third device. The trust profile information may be recorded in a trust profile. In a possible implementation, the third device may obtain the trust profile from a trust profile repository. In a possible implementation, the third device may directly read the trust profile in a local memory.

According to a twelfth aspect, an embodiment of this application provides a data processing apparatus that may include a memory and a processor. The memory is configured to store a program, and the processor is configured to execute the program in the memory, to perform the method according to the first aspect and any optional implementation of the first aspect, the method according to the second aspect and any optional implementation of the second aspect, the method according to the third aspect and any optional implementation of the third aspect, the method according to the fourth aspect and any optional implementation of the fourth aspect, and the method according to the fifth aspect and any optional implementation of the fifth aspect.

According to a thirteenth aspect, an embodiment of this application provides a computer-readable storage medium. The computer-readable storage medium stores a computer program. When the computer program is run on a computer, the computer is enabled to perform the method according to the first aspect and any optional implementation of the first aspect, the method according to the second aspect and any optional implementation of the second aspect, the method according to the third aspect and any optional implementation of the third aspect, the method according to the fourth aspect and any optional implementation of the fourth aspect, and the method according to the fifth aspect and any optional implementation of the fifth aspect.

According to a fourteenth aspect, an embodiment of this application provides a computer program product including instructions. When the computer program product runs on a computer, the computer is enabled to perform the method according to the first aspect and any optional implementation of the first aspect, the method according to the second aspect and any optional implementation of the second aspect, the method according to the third aspect and any optional implementation of the third aspect, the method according to the fourth aspect and any optional implementation of the fourth aspect, and the method according to the fifth aspect and any optional implementation of the fifth aspect.

According to a fifteenth aspect, this application provides a chip system. The chip system includes a processor, configured to support a data processing apparatus in implementing a part or all of functions in the foregoing aspects, for example, sending or processing data or information in the foregoing methods. In a possible design, the chip system further includes a memory. The memory is configured to store program instructions and data that are necessary for a data processing apparatus. The chip system may include a chip, or may include a chip and another discrete component.

### BRIEF DESCRIPTION OF DRAWINGS

FIG. 1A and FIG. 1B are a diagram of an application scenario;
FIG. 2 is a diagram of a structure of a terminal device;
FIG. 3 is a diagram of a structure of a server;
FIG. 4 is a diagram of a cloud service;
FIG. 5 is a diagram of an application architecture;
FIG. 6A is a diagram of a framework of a trust record;
FIG. 6B is a schematic flowchart of a data processing method;
FIG. 7A is a diagram of generating trustworthiness information;
FIG. 7B is a diagram of generating trustworthiness information;
FIG. 7C is a diagram of generating a trustworthy report;
FIG. 7D is a diagram of generating a trustworthy report;
FIG. 8A is a diagram of a trust profile;
FIG. 8B is a diagram of a trust profile;
FIG. 9 is a schematic flowchart of a data processing method;
FIG. 10 is a schematic flowchart of a data processing method;
FIG. 11 is a schematic flowchart of a data processing method;
FIG. 12 is a schematic flowchart of a data processing method;
FIG. 13 is a schematic flowchart of a data processing method;
FIG. 14 is a schematic flowchart of a data processing method;
FIG. 15 is a schematic flowchart of a data processing method;
FIG. 16A-1 and FIG. 16A-2 are a schematic flowchart of a data processing method;

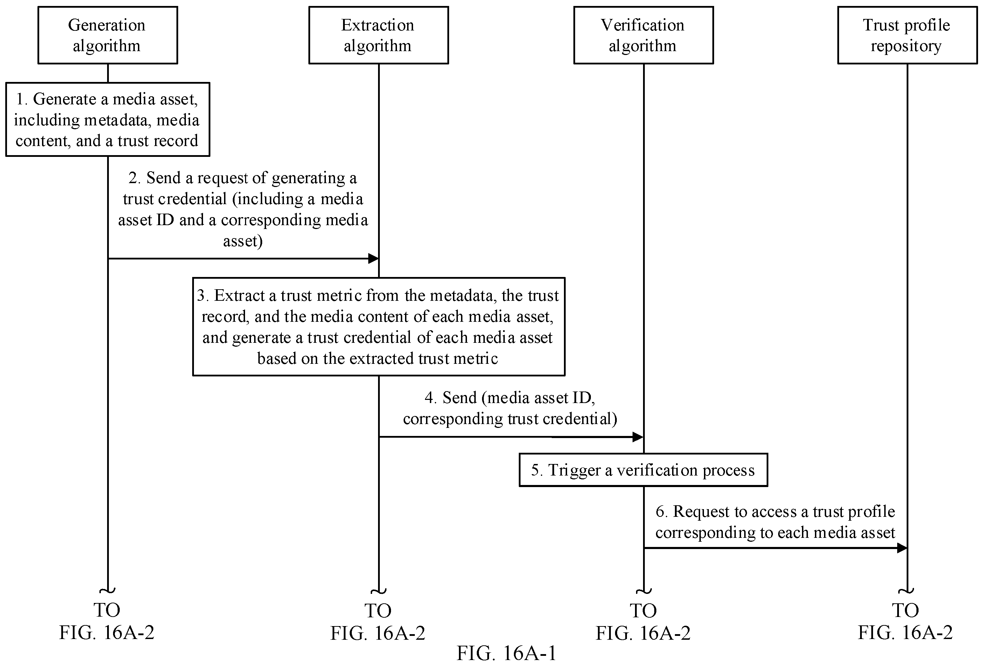

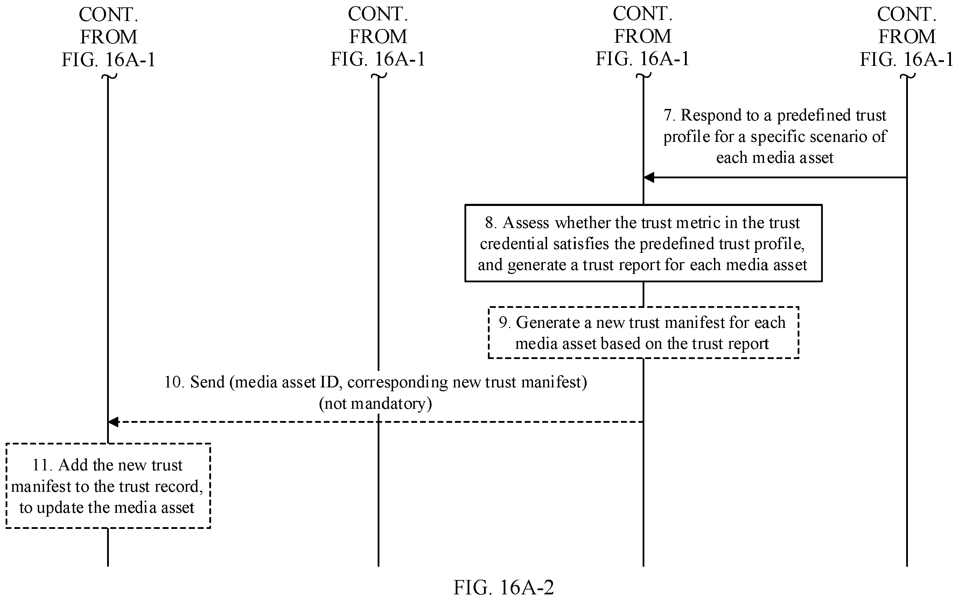

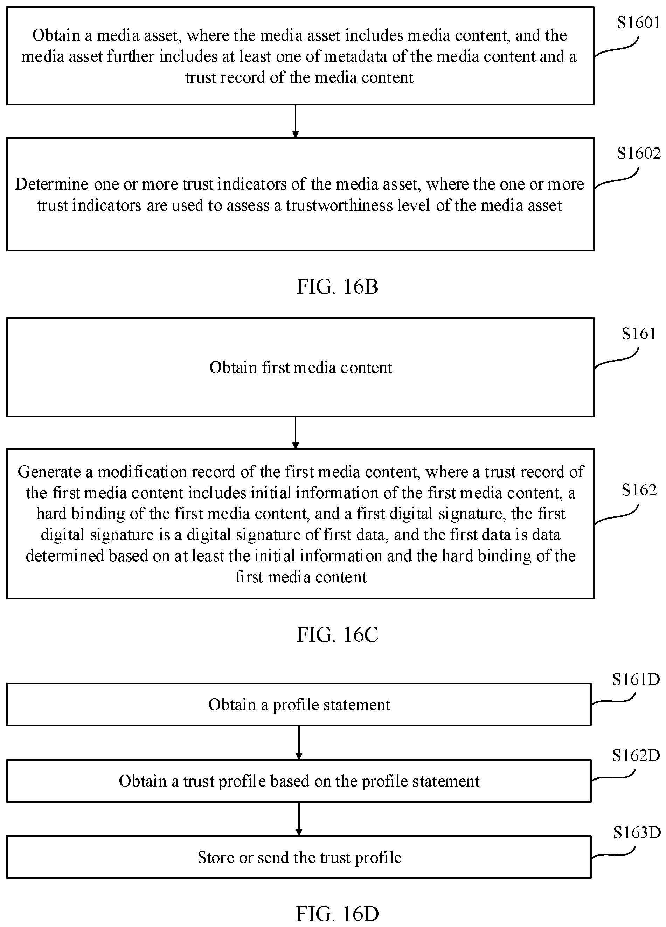

FIG. 16B is a schematic flowchart of a data processing method;
FIG. 16C is a schematic flowchart of a data processing method;
FIG. 16D is a schematic flowchart of a data processing method;

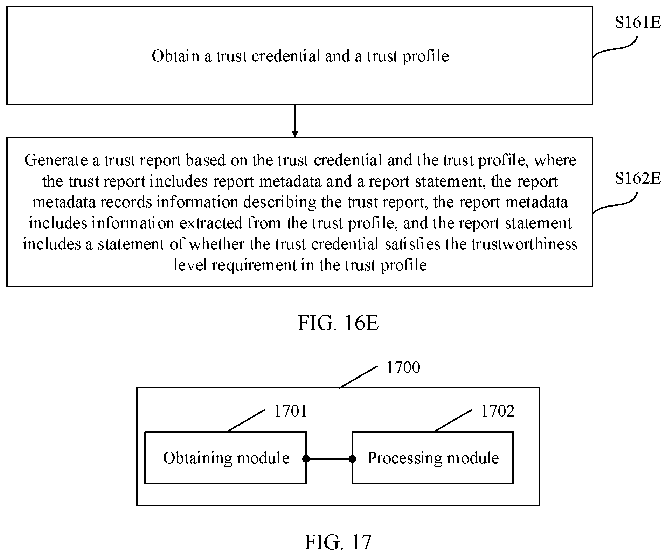

FIG. 16E is a schematic flowchart of a data processing method;
FIG. 17 is a diagram of a structure of a data processing apparatus;

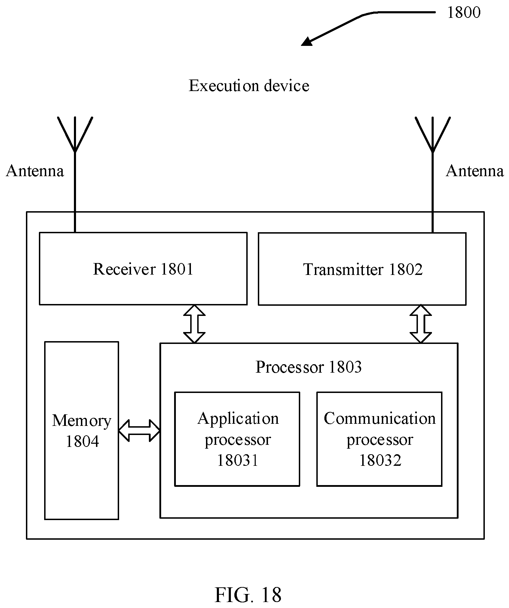

FIG. 18 is a diagram of a structure of a data processing apparatus; and

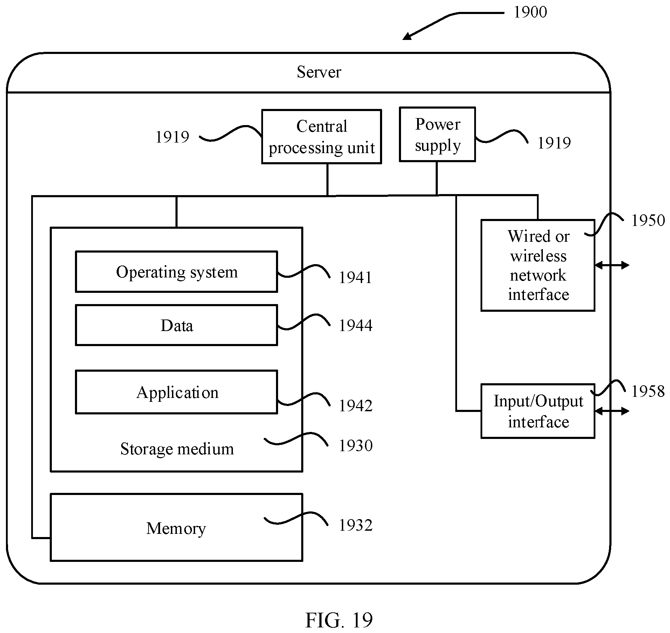

FIG. 19 is a diagram of a structure of a server.

### DESCRIPTION OF EMBODIMENTS

The following describes embodiments of the present invention with reference to the accompanying drawings in embodiments of the present invention. Terms used in implementations of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In this specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, terms "include" and "have" and any variants thereof are intended to cover nonexclusive inclusion, so that a process, method, system, product, or device that includes a series of units is not necessarily limited to those units, but may include other units that are not explicitly listed or are inherent to such a process, method, product, or device.

Terms "substantially (substantially)", "about (about)", and the like used in this specification are approximate terms rather than degree terms, and are intended to take into account inherent deviations of measured values or calculated values that are known to a person of ordinary skill in the art. In addition, when embodiments of the present invention are described, "may (may)" is used to mean "one or more possible embodiments". Terms "use (use)", "using (using)", and "used (used)" used in this specification may be considered to be synonymous with terms "utilize (utilize)", "utilizing (utilizing)", and "utilized (utilized)" respectively. In addition, the term "example (example)" is intended to indicate an example or an illustration.

An application scenario of this application is first described.

This application may provide a user with trustworthiness information (or may be referred to as a trust report) that is used as a basis for determining a trustworthiness level of a media asset. The trustworthiness information may indicate satisfaction of one or more trust indicators of the media asset in a profile. The user can determine the trustworthiness level of the media asset based on the trustworthiness information.

In a scenario, embodiments of this application may be applied to an application that provides trustworthiness information of a media asset.

In a scenario, embodiments of this application may be applied to a cloud service that provides trustworthiness information of a media asset.

In a scenario, embodiments of this application may be applied to a media asset management module. The module may generate trustworthiness information of a media asset, and update a trust record in the media asset by using the trustworthiness information or generate, based on the trustworthiness information, a file associated with the media asset, to help the user determine a trustworthiness level of the media asset.

This application may provide a user with a trust indicator (or may be referred to as a trust credential) that is used as a basis for determining a trustworthiness level of a media asset. The trust indicator may include a parameter indicating the trustworthiness level of the media asset.

In a scenario, embodiments of this application may be applied to an application that provides a trust credential.

In a scenario, embodiments of this application may be applied to a cloud service that provides a trust credential.

In a scenario, embodiments of this application may be applied to a media asset management module. The module may generate a trust credential of a media asset, and update a trust record in the media asset by using the trust credential or generate, based on the trust credential, a file associated with the media asset, to help the user determine a trustworthiness level of the media asset.

This application may provide a user with a trust profile for generating trustworthiness information (a trust report) of a media asset. The trust profile indicates a trustworthiness level requirement of the media asset, and the trust profile is used together with a trust credential of the media asset to generate the trust report.

In a scenario, embodiments of this application may be applied to an application that provides a trust profile.

In a scenario, embodiments of this application may be applied to a cloud service that provides a trust profile.

In a scenario, this embodiment of this application may be applied to a trust profile management module. The module may generate a trust profile of a media asset.

The following separately describes the foregoing application scenarios.

### Scenario 1: Application

In a scenario, embodiments of this application are in a form of an application (which may be briefly referred to as a trustworthiness determining application in embodiments of this application) for providing trustworthiness information, a trust credential, or a trust profile of a media asset.

A product form of embodiments of this application may be a trustworthiness determining application. The trustworthiness determining application may run on a terminal device or a cloud-side server.

In a possible implementation, the trustworthiness determining application may present trustworthiness information, a trust credential, or a trust profile of a media asset to a user in response to input of media content or indication information of the media asset.

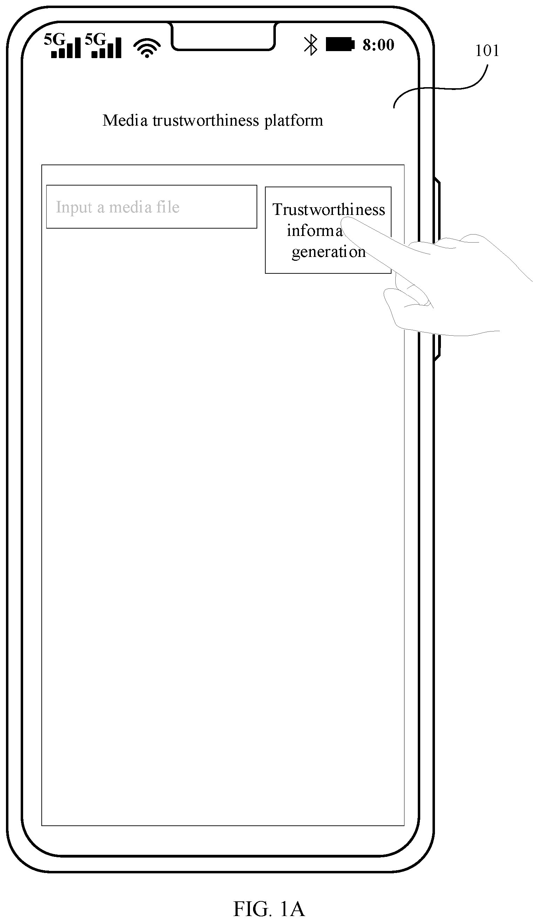

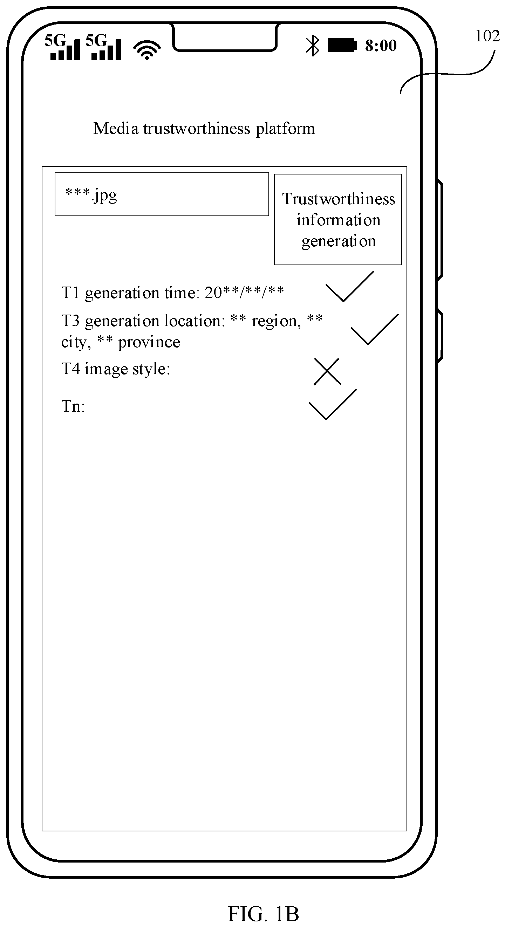

FIG. 1A and FIG. 1B are a diagram of an example of an application scenario.

When a user needs to determine a trustworthiness level of media content, the user may open a client (for example, an application, an applet, or a web page) of a media trustworthiness platform on a terminal device to perform query.

For example, after a mobile phone A of a user A receives media content sent by a mobile phone B of a user B, if the user A needs to use (for example, forward) the media content, the user A may first determine a trustworthiness level of the media content. After determining the trustworthiness level of the media content, the user A determines whether to use the media content.

It should be understood that the mobile phone A may alternatively be another electronic device with a strong computing capability, for example, a personal computer, a computer workstation, or a tablet computer. This is not limited in this application.

For example, when the user needs to determine a trustworthiness level of media content in a smartwatch, the user may send the media content in the smartwatch to a mobile phone, and the mobile phone determines the trustworthiness level of the media content and then sends trustworthiness information to the smartwatch.

It should be understood that the smartwatch may alternatively be another electronic device with a weak computing capability, for example, a media consumption device, a wearable device, a set-top box, or a game console. This is not limited in this application. The mobile phone may alternatively be another electronic device with a strong computing capability, for example, a personal computer, a computer workstation, or a tablet computer. This is not limited in this application.

With reference to FIG. 1A, a main interface 101 of the media trustworthiness platform may include one or more controls, including but not limited to an input box, a trustworthiness level determining button, and the like. This is not limited in this application.

For example, the user may tap the input box, and the media trustworthiness platform may display a file selection interface in response to the operation behavior of the user. Then, after selecting corresponding media content on the file selection interface, the user may tap a trustworthiness information generation button on the main interface 101. Correspondingly, the media trustworthiness platform may obtain trustworthiness information of a media asset in response to the operation behavior of the user.

For example, the media trustworthiness platform may display the trustworthiness information. For example, in this embodiment of this application, the trustworthiness information may include whether at least one trust indicator that is of the media asset and that is for the media content satisfies a metric requirement in a predefined profile.

With reference to FIG. 1B, a displayed verification result in FIG. 1B includes satisfaction of trust indicators T1, T3, T4, and Tn of the media content against metric requirements specified in the predefined profile, for example, the trust indicator T1 satisfies the metric requirement, the trust indicator T2 satisfies the metric requirement, the trust indicator T3 does not satisfy the metric requirement, and the trust indicator T4 satisfies the metric requirement.

In a possible manner, the client of the media trustworthiness platform may identify the trustworthiness information of the media asset. For example, when there is one to-be-identified media asset, the client of the media trustworthiness platform may locally perform identification.

In a possible manner, a server of the media trustworthiness platform may identify the trustworthiness information of the media asset. For example, when there are a plurality of to-be-identified media assets, the client of the media trustworthiness platform may send the plurality of to-be-identified media assets to the server of the media trustworthiness platform, and the server of the media trustworthiness platform identifies trustworthiness information of the media assets, and returns the identified trustworthiness information to the client of the media trustworthiness platform.

It should be noted that, in this application, whether the client of the media trustworthiness platform identifies the trustworthiness information of the media asset or the server of the media trustworthiness platform identifies the trustworthiness information of the media asset is not limited by a quantity of pieces of to-be-identified media content.

It should be understood that the description of the scenario corresponding to FIG. 1A and FIG. 1B is also applicable to generation of a trust credential, and similarities are not described herein again.

The following describes a product form that a terminal 100 takes when the media trustworthiness platform is on a terminal side.

The terminal 100 in embodiments of this application may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

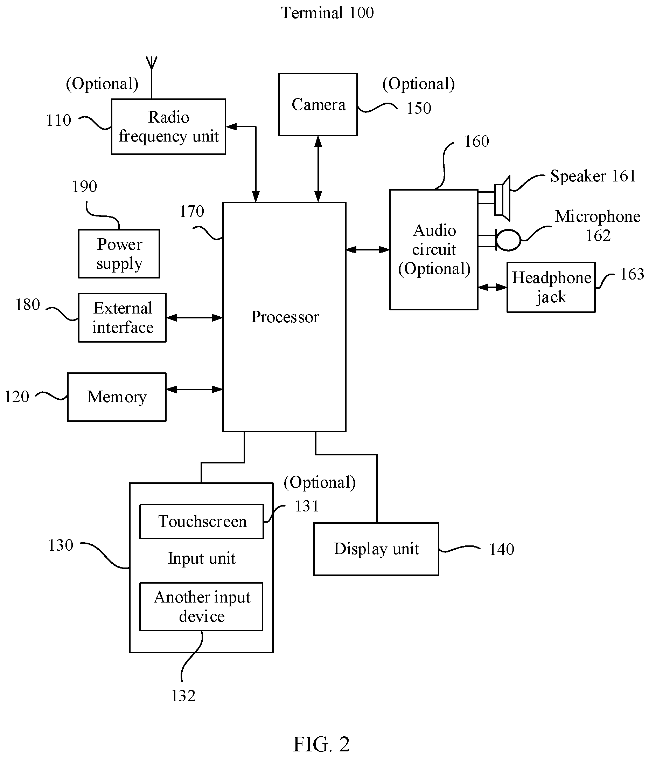

FIG. 2 is a diagram of an optional hardware structure of the terminal 100.

As shown in FIG. 2, the terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art may understand that FIG. 2 is merely an example of the terminal or a multi-functional device and does not constitute a limitation on the terminal or the multi-functional device. More or fewer components than those shown in the figure may be included, or some components may be combined, or different components may be used.

The input unit 130 may be configured to: receive input digit or character information, and generate a key signal input related to a user setting and function control of the portable multi-functional apparatus. Specifically, the input unit 130 may include a touchscreen 131 (optional) and/or another input device 132. The touchscreen 131 may collect a touch operation performed by a user on or near the touchscreen 131 (for example, an operation performed by the user on or near the touchscreen by using any proper object such as a finger, a joint, or a stylus), and drive a corresponding connection apparatus based on a preset program. The touchscreen may detect a touch action performed by the user on the touchscreen, convert the touch action into a touch signal, and send the touch signal to the processor 170, and can receive a command sent by the processor 170 and execute the command. The touch signal includes at least touch point coordinate information. The touchscreen 131 may provide an input interface and an output interface between the terminal 100 and the user. In addition, the touchscreen may be implemented in a plurality of types such as a resistive type, a capacitive type, an infrared ray type, and a surface acoustic wave type. In addition to the touchscreen 131, the input unit 130 may include the another input device. Specifically, the other input devices 132 may include but are not limited to one or more of the following: a physical keyboard, a functional button (for example, a volume control button 132 or an on/off button 133), a trackball, a mouse, a joystick, and the like.

The input device 132 may receive a media asset designated for trustworthiness level determining.

The display unit 140 may be configured to display information input by the user, information provided for the user, various menus of the terminal 100, an interaction interface, a file, and/or playing of any multimedia file. In embodiments of this application, the display unit 140 may be configured to display trustworthiness information (for example, a trust report), and the like.

The memory 120 may be configured to store instructions and data. The memory 120 may mainly include an instruction storage area and a data storage area. The data storage area may store various types of data such as a multimedia file and a text. The instruction storage area may store software units such as an operating system, an application, and instructions required by at least one function, or subsets and extended sets thereof. The memory 120 may further include a non-volatile random access memory, and provide hardware, software, a data resource, and the like in a management and calculation processing device for the processor 170, to support control on software and an application. The memory 120 is further configured to: store a multimedia file, and run a program and store an application.

The processor 170 is a control center of the terminal 100, connects various parts of the entire terminal 100 through various interfaces and lines, and performs various functions of the terminal 100 and processes data by running or executing the instructions stored in the memory 120 and calling the data stored in the memory 120, to perform overall control on the terminal device. Optionally, the processor 170 may include one or more processing units. Preferably, an application processor and a modem processor may be integrated into the processor 170. The application processor mainly processes an operating system, a user interface, an application, and the like. The modem processor mainly processes wireless communication. It can be understood that the modem processor may not be integrated into the processor 170. In some embodiments, the processor and the memory may be implemented on a single chip. In some embodiments, the processor and the memory may be implemented on separate chips. The processor 170 may be further configured to: generate a corresponding operation control signal, send the operation control signal to a corresponding component in the computing processing device, and read and process data in software, especially, read and process the data and the program in the memory 120, to enable each functional module to perform a corresponding function, to control a corresponding component to perform an action as required by an instruction.

The memory 120 may be configured to store software code related to a data processing method. The processor 170 may perform steps of a data processing method of a chip, or may schedule another unit (for example, the input unit 130 and the display unit 140) to implement a corresponding function.

The radio frequency unit 110 (optional) may be configured to receive and send signals in an information sending/receiving process or in a call process, for example, receive downlink information from a base station and then send the downlink information to the processor 170 for processing, or send uplink-related data to a base station. Usually, an RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. Any communication standard or protocol may be used for the wireless communication, including but not limited to a global system for mobile communications (Global System for Mobile Communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

In embodiments of this application, the radio frequency unit 110 may send media content to a server 200, and receive trustworthiness information sent by the server 200.

It should be understood that the radio frequency unit 110 is optional, and may be replaced with another communication interface, for example, may be a network interface.

The terminal 100 further includes the power supply 190 (for example, a battery) for supplying power to various components. Preferably, the power supply may be logically connected to the processor 170 through a power management system, to implement functions such as charging and discharging management and power consumption management through the power management system.

The terminal 100 further includes the external interface 180. The external interface may be a standard micro USB interface, or may be a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. A part or all of the methods described below may be applied to the terminal 100 shown in FIG. 2.

The following describes a product form that the server 200 takes when the media trustworthiness platform is on a server side.

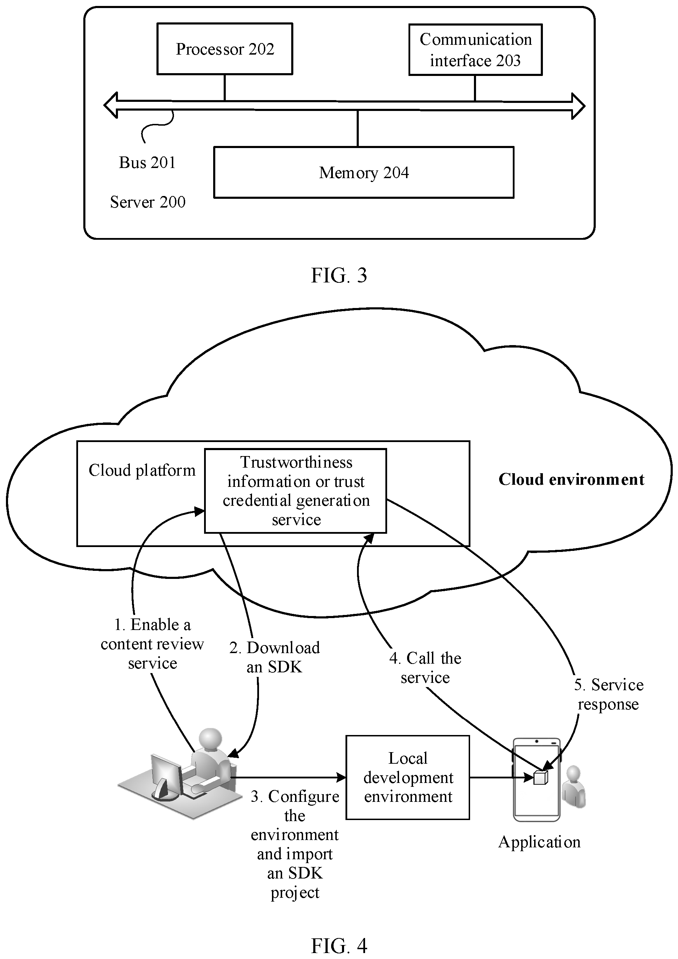

FIG. 3 is a diagram of a structure of the server 200. As shown in FIG. 3, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is used for representation in FIG. 3, but this does not mean that there is only one bus or only one type of bus.

The processor 202 may be any one or more of processors such as a central processing unit (central processing unit, CPU), a graphics processing unit (graphics processing unit, GPU), a microprocessor (microprocessor, MP), or a digital signal processor (digital signal processor, DSP).

The memory 204 may include a volatile memory (volatile memory), for example, a random access memory (random access memory, RAM). The memory 204 may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The memory 204 may be configured to store software code related to a data processing method. The processor 202 may perform steps of a data processing method of a chip, or may schedule another unit to implement a corresponding function.

It should be understood that the terminal 100 and the server 200 may be centralized or distributed devices. Processors (for example, the processor 170 and the processor 202) in the terminal 100 and the server 200 each may be a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the processor may be a hardware system that has an instruction execution function, for example, a CPU or a DSP, or may be a hardware system that does not have an instruction execution function, for example, an ASIC or an FPGA, or may be a combination of the hardware system that does not have the instruction execution function and the hardware system that has the instruction execution function.

### Scenario 2: Cloud service

In a scenario, embodiments of this application are in a form of a cloud service for providing trustworthiness information, a trust credential, or a trust profile of a media asset.

In a possible implementation, the server may provide, for a device side through an application programming interface (application programming interface, API), a service of querying the trustworthiness information, the trust credential, or the trust profile of the media asset.

A terminal device may send a related parameter (for example, data such as a media asset) to the server through an API provided by a cloud. The server may obtain a processing result (for example, trustworthiness information or a trust credential) based on the received parameter, and return the processing result to the terminal.

In an implementation, the server may generate the trust profile, and send the trust profile to another device, so that the another device assess a trustworthiness level of the media asset based on the trust profile. In an implementation, because different regions or platforms may have different trustworthiness level requirements on the media asset, the server may alternatively locally store the trust profile, and another device may query a trust profile of a corresponding region by using the server, to understand a trustworthiness level requirement of a media asset of the corresponding region.

In an implementation, because different media platforms may have different trustworthiness level requirements on the media asset, the media platform may alternatively set a trust profile, for example, TikTok, Kwai, or RedNote.

For descriptions of the terminal and the server, refer to the descriptions in the foregoing embodiments. Details are not described herein again.

FIG. 4 shows a procedure of using a trustworthiness level determining function-type cloud service provided by a cloud platform.
1. Enable and purchase a content review service.
2. A user may download a software development kit (software development kit, SDK) corresponding to the content review service. Usually, the cloud platform provides SDKs of a plurality of development versions for the user to select based on a development environment requirement, for example, a Java-version SDK, a Python-version SDK, a PHP-version SDK, and an Android-version SDK.
3. After locally downloading an SDK of a corresponding version based on a requirement, the user imports an SDK project to a local development environment, and configures and debugs the SDK project in the local development environment. Another function may be further developed in the local development environment, to form an application that integrates a trustworthiness level determining capability.
4. During use of the trustworthiness level determining application, when there is a need to perform a trustworthiness level determining function, an API call for the trustworthiness level determining function may be triggered. When the application triggers the trustworthiness level determining function, an API request is initiated to a running instance of a trustworthiness level determining service in a cloud environment. The API request carries media content. The running instance in the cloud environment processes the media content, to obtain trustworthiness information.
5. The cloud environment returns the trustworthiness information to the application, thereby completing a single call of the trustworthiness level determining function.

### Scenario 3: Media asset management module

In this scenario, a terminal device may capture or generate media content. For example, the terminal device may capture an image by using a camera built in a terminal device, or generate new media content through media content editing software (for example, through AIGC).

When obtaining media content, the terminal device further needs to generate a corresponding media asset through a media asset management module, and the media asset may include metadata, a trust record, and the like.

In this scenario, the media asset management module may generate trustworthiness information based on the content in the media asset, and add the trustworthiness information to the media asset or use the trustworthiness information as a file associated with the media asset.

In an implementation, different users may have different trustworthiness level requirements on the media asset, and the user may set a trust profile by using the media asset management module of the terminal device.

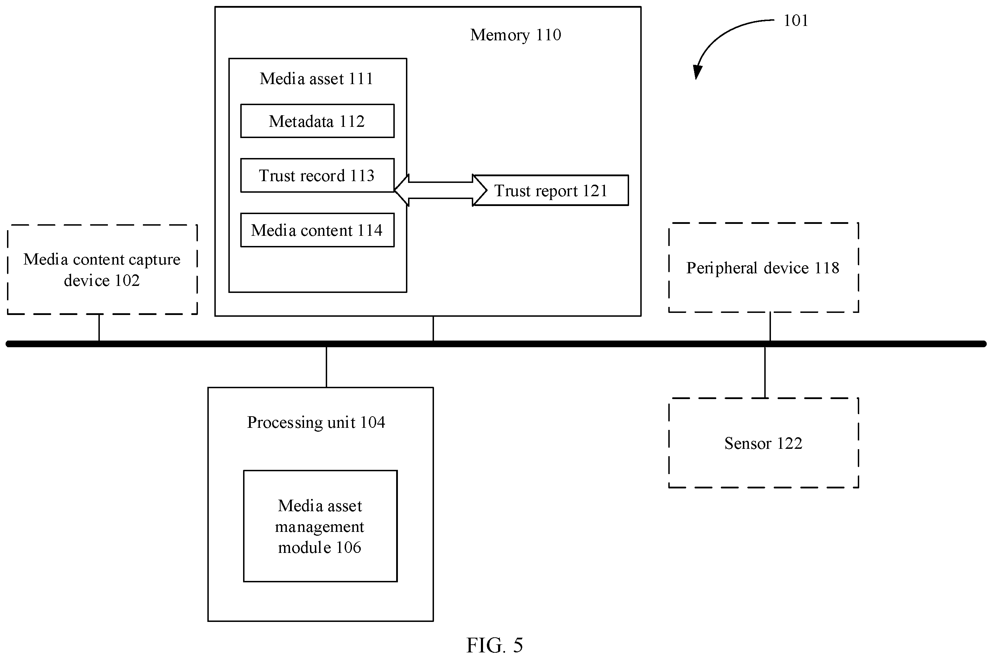

FIG. 5 is a block diagram of a structure of a terminal device 101 in which a media asset management module is located.

According to one or more implementations described in this application, the terminal device 101 may include electronic components for managing a media item (for example, a media asset). The client device 101 may be accommodated in a single computing system (such as a desktop computer system, a laptop computer system, a tablet computer system, a server computer system, a mobile phone, a media player, a personal digital assistant, a personal communicator, a game device, a network router, a network hub, a wireless access point (AP), a repeater, a set-top box, or a combination thereof). The components in the terminal device 101 may be spatially separated and implemented on separate computing systems connected through communication technologies 110.

For an implementation, one or more components in the client device 101 may be implemented as one or more integrated circuits (IC). For example, at least one of a processing unit 104, a media content capture device 102, a peripheral device 118, a sensor 122, or a memory 110 may be implemented as a system-on-chip (SoC) IC, a three-dimensional (3D) IC, any other known IC, or any combination of known ICs. For another implementation, two or more components in the client device 101 are implemented together as one or more ICs. For example, at least two of a processing unit 104, a media content capture device 102, a peripheral device 118, a sensor 122, or a memory 110 may be implemented together as an SoC IC. The following describes each component of the client device 101.

The terminal device 101 may include the media content capture device 102 (for example, an imaging device for capturing an image, an audio device for capturing a sound, a multimedia device for capturing audio and a video, or any other known user media content capture device). For an implementation, the media content capture device 102 may further include a signal processing pipeline implemented as hardware, software, or a combination thereof. The signal processing pipeline may perform one or more operations on data received from one or more components in the device 102. The signal processing pipeline may also provide processed data for the memory 110, the peripheral device 118 (as further discussed below), and/or the processing unit 104.

The terminal device 101 may include the processing unit 104, such as a CPU, a GPU, another integrated circuit (IC), a memory, and/or another electronic circuit. For an implementation, the processing unit 104 may generate a media asset 111 associated with media content 114 through the media asset management module 106. In some implementations, the processing unit 104 may generate trustworthiness information based on the content in the media asset, and add the trustworthiness information to the media asset or use the trustworthiness information as a file associated with the media asset (for example, a trust report 121 shown in FIG. 5). In some implementations, the processing unit 104 may generate a trust profile of the media asset.

The terminal device 101 may further include the peripheral device 118. For an implementation, the peripheral device 118 may include at least one of the following: (i) one or more input devices (for example, a mouse, a keyboard, and the like) that interact with or send data to one or more components of the client device 101; (ii) one or more output devices (for example, a monitor, a printer, and a display device) that provide an output from one or more components of the client device 101; or (iii) one or more storage devices that store data other than the memory 110. The peripheral device 118 is shown in a dashed box to indicate that the peripheral device 118 is an optional component of the client device 101. The peripheral device 118 may alternatively be a single component or device that may be used as an input device and may also be used as an output device (for example, a touchscreen). The client device 101 may include at least one peripheral control circuit (not shown) for the peripheral device 118. The peripheral control circuit may be a controller (for example, a chip, an expansion card, or an independent device). The controller interacts with the peripheral device 118 and is configured to indicate an operation to be performed by the peripheral device. The peripheral device controller may be a separate processing unit or may be integrated into the processing unit 104. The peripheral device 118 may also be referred to as an input/output (I/O) device 118 throughout this specification.

The terminal device 101 may further include one or more sensors 122. The one or more sensors are shown in a dashed box to indicate that the sensor may be an optional component of the client device 101. For an implementation, the sensor 122 may detect one or more characteristics of an environment. Examples of the sensor include but are not limited to an optical sensor, an imaging sensor, an accelerometer, a sound sensor, a barometric pressure sensor, a proximity sensor, a vibration sensor, a gyroscope sensor, a compass, a barometer, a thermal sensor, a rotation sensor, a speed sensor, and an inclinometer.

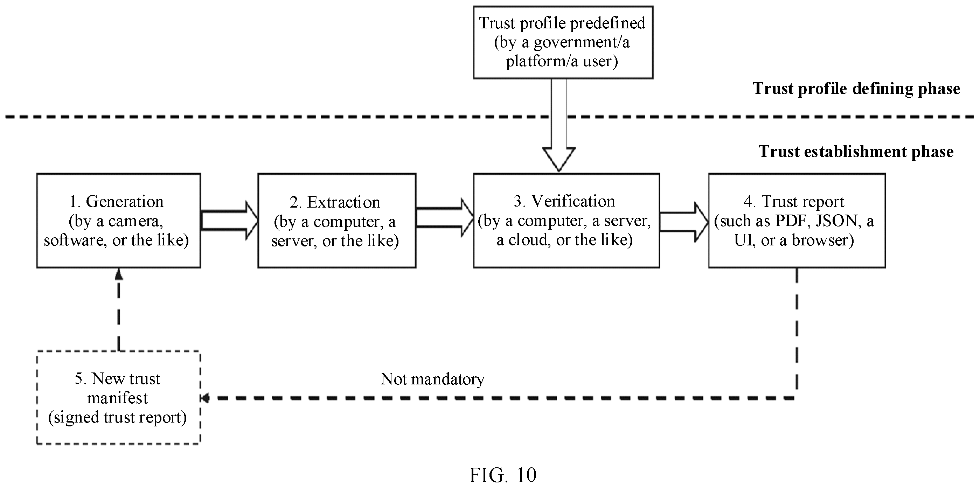

With reference to FIG. 4 and FIG. 10, this embodiment provides a trust assessment system, including:
a first device, configured to obtain a media asset;
a second device, configured to obtain one or more trust indicators of the media asset based on the media asset, where the first device and the second device may be same or different devices; and
a third device, configured to obtain a trust report generated based on the one or more trust indicators of the media asset and trust profile information. In a possible implementation, the one or more trust indicators of the media asset are recorded in a trust credential. In a possible implementation, the second device sends the one or more trust indicators of the media asset to the third device in response to a request from the third device. The trust profile information may be recorded in a trust profile. In a possible implementation, the third device may obtain the trust profile from a trust profile repository. The trust profile repository may be set in a fourth device. In a possible implementation, the third device may directly read the trust profile in a local memory.

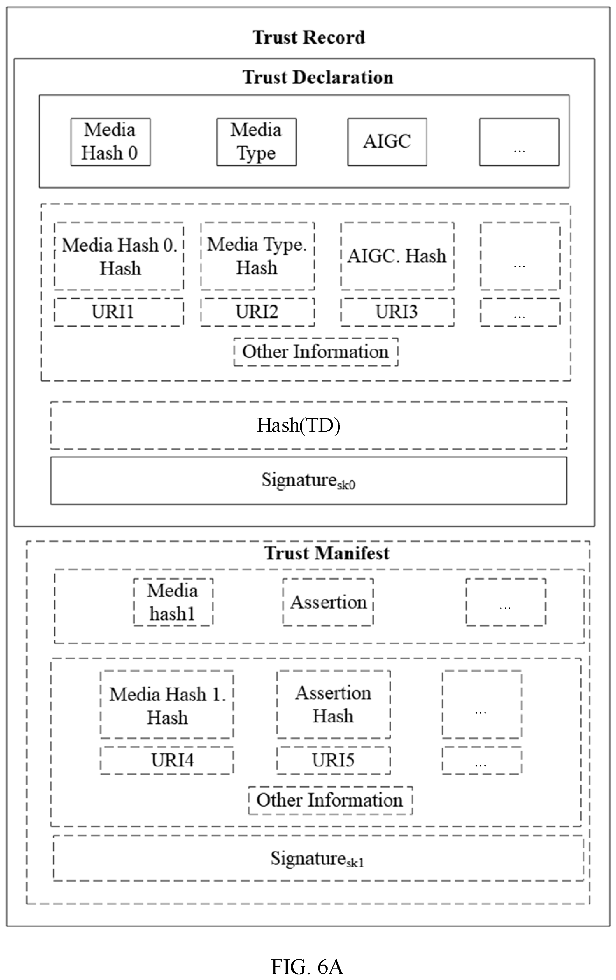

FIG. 6A shows a framework of a trust record of a media asset.

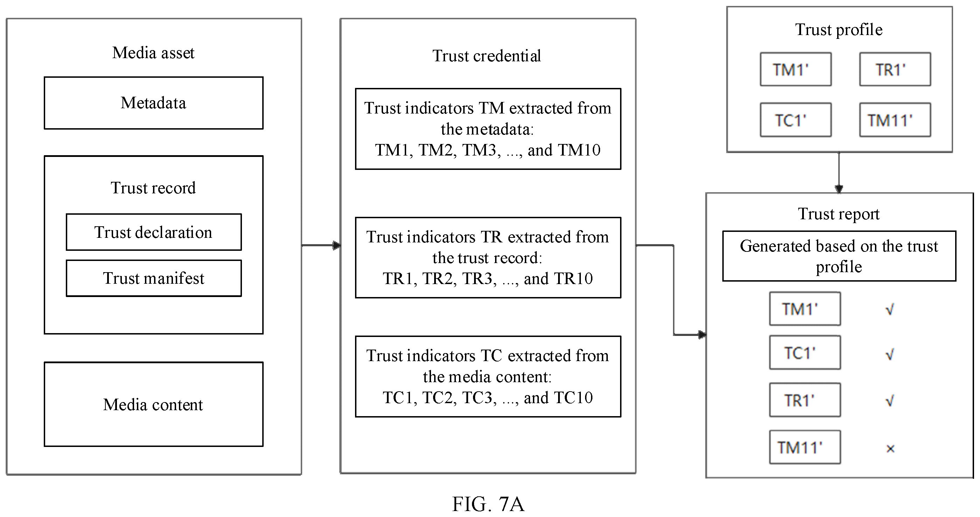

For example, as shown in FIG. 7A, the media asset may include media content (Media Content), metadata (Metadata) of the media content, and a trust record of the media content. The metadata and the trust record of the media content are bound to the media content, or the metadata and the trust record of the media content are associated with the media content.

When the media asset for the media content is obtained, the metadata and the trust record of the media content are also correspondingly obtained. For example, when an image is obtained, the image in a digital form, and metadata and a trust record of the image can be obtained.

It should be noted that in some scenarios, the media asset (Media Asset) is also referred to as a media file or a digital asset.

The media content may be an image, audio, a video, or a text.

The media asset may include a trust record (Trust record). In an implementation, the trust record may be a part of metadata. In an implementation, the trust record and metadata may exist independent of each other in the media asset. For example, the media content may also be referred to as digital content (Digital content). The media content may be a part of the media asset, and represents actual content of media. The digital content is content, of different content types, that exists in a digital form such as a text, an image, and a sound, and may be stored on digital carriers such as an optical disc and a hard disk and transmitted through means such as a network. The digital content is the entirety of products or services that integrate and use content such as an image, a text, audio, and a video through digital technologies, and is a product of combining digital media technologies and cultural creativity. For example, the media content may be pixel data of an image, and any additional technical metadata (for example, a color profile or an encoding parameter) required for understanding or presenting the content.

A digital technology (Digital Technology) is a scientific technology that develops alongside electronic computers, and is a technology that uses specific devices to convert various information, including images, texts, audios, videos, and the like, into binary digits "0" and "1" that can be identified by the electronic computers for computing, processing, storage, transmission, dissemination, and restoration. Because processes such as computing and storage need to use the computers for encoding, compression, decoding, and the like of information, the digital technology is also referred to as a digital tech, a computer digital technology, and the like. The digital technology is also referred to as a digital control technology.

For example, the metadata may include data used to describe the media content, and the metadata may record non-technical information about the media asset or the media content. For example, the metadata may include information that describes a property (property) of the media content. For example, the metadata may be a trust document (or referred to as a trust manifest (Trust Manifest)). For example, the metadata may be a creation location, a creator, an annotation, or IPR information of the media content.

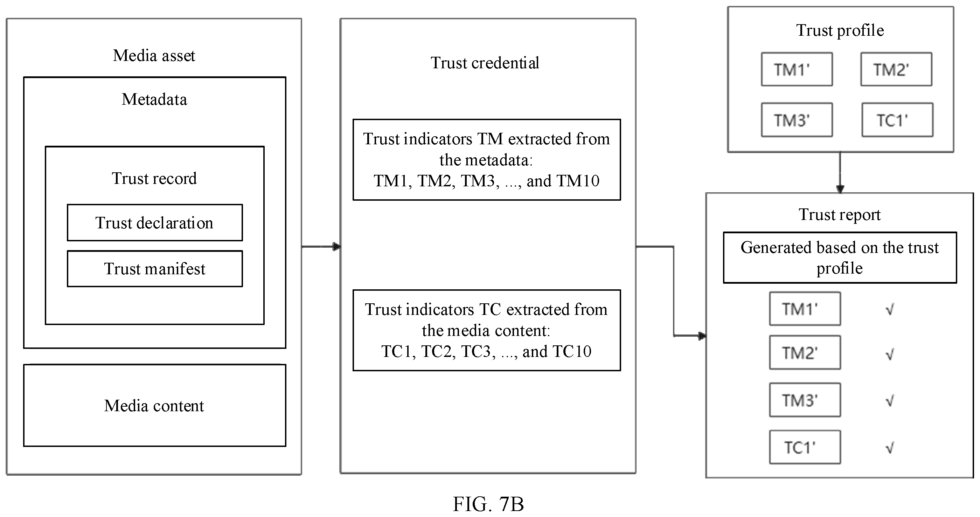

For example, as shown in FIG. 7B, a trust record of media content may be a type of metadata of the media content (or does not belong to metadata, but is independent of the metadata and belongs to a media asset). The trust record records related information about generation and transition of the media content, and may be used for tracing provenance of the media content.

In an embodiment, as shown in FIG. 6A, the trust record may include a trust declaration and a trust manifest.

For example, the trust declaration (Trust declaration) may be a trust manifest, and may be located in the first place of the trust record. The trust declaration may alternatively be a type of metadata of media content.

In a possible implementation, the trust declaration (Trust declaration) in the trust record may include initial information of first media content, a hard binding (Hard binding) of the first media content, and a first digital signature Signatureₛₖ₀, the first digital signature is a digital signature of first data, and the first data is data determined based on at least the initial information and the hard binding of the first media content.

The first media content may be content, of different content types, that exists in a digital form, such as a text, an image, and a sound. For example, the first media content may be pixel data of an image, and any additional technical metadata (for example, a color profile or an encoding parameter) required for understanding or presenting the content.

The hard binding is data obtained by performing hard binding processing on original data. Hard binding processing is a processing method used to prevent the original data from being forged, and the original data cannot be obtained by performing reverse processing on a hard binding of the original data. Hard binding processing is performed on the original data to obtain the hard binding of the original data. For example, the original data is processed using a one-way function. For example, hash processing may be a type of hard binding processing. In other words, a hard binding may include a hash value. The hard binding of the first media content may also include a first media hash value, and the first media hash value (Media Hash 0) is a hash value of the first media content.

For example, the first data is data obtained by combining at least the hard binding of the first media content and the initial information of the first media content, or the first data is data obtained by combining at least a hard binding of the initial information (for example, a hash value AIGC.Hash of AI-generated content AIGC, or a hash value Media Type.Hash of a media generation manner) and a hard binding of a first media hard binding (for example, a hash value Media Hash 0.Hash of a first media hash value).

For example, the first data may alternatively be a first combined hash value (Hash(TD)), and the first combined hash value includes a hash value obtained by combining the initial information of the first media content and the first media hash value. For example, the first combined hash value includes a hash value obtained by combining the initial information of the first media content, the first media hash value, and other descriptive information. The other descriptive information may not be other descriptive information in the initial information, for example, information about a tool for generating a trust profile or other information describing the initial information of the first media content. This is not limited in this application.

For example, the first data may alternatively be a first combined hash value, and the first combined hash value may include a hash value obtained by combining a hash value of the initial information of the first media content and a hash value (Media Hash 0. Hash) of a first media hash value. For example, the first combined hash value is a hash value obtained by combining the hash value of the initial information of the first media content, the hash value of the first media hash value, and a hash value of other metadata information. Herein, when there are at least two pieces of initial information of the first media content, the hash value of the initial information of the first media content may include a hash value of each piece of initial information of the first media content, or the hash value of the initial information of the first media content may include a hash value obtained by combining all the pieces of initial information of the first media content.

For example, the initial information of the media content may be information generated when the media content is generated. For example, the initial information of the media content includes at least one of the following: generation time of the media content, an author name of the media content, a digital content identifier of the media content, a generation location of the media content, information about a generation device of the media content, a resolution of the media content, a size of the media content, a media type (Media Type) of the media content, or a generation manner of the media content. For example, the information about the generation device of the media content may include a model of the device, a parameter of a camera, and the like; and the parameter of the camera may include a focal length, sensitivity, an exposure level, and the like of the camera during picture taking. It should be understood that the initial information of the media content may further include other information, for example, information used to describe the media content such as copyright information. This is not limited in this application.

For example, the media type may include but is not limited to an image type, a video type, an audio type, a graphics type, and the like. The generation manner may include an AI generation manner, a non-AI generation manner, and the like. In a possible manner, the generation manner in the initial information may be replaced with an AI-generated content (AIGC) identifier. For example, when the media content is generated by AI, a value of the AIGC identifier is 1; or when the media content is not generated by AI, a value of the AIGC identifier is 0. The author name of the media content may be a name of a creator of the media content or a name of a shooting device of the media content. This is not limited in this application.

For the digital signature of the first data, the first data is usually digitally signed by using a private key, to obtain the digital signature of the first data.

For example, the private key may be a private key of an electronic device or a user. For example, the first data may be digitally signed by using a digital signature algorithm and the private key, to obtain the digital signature of the first data. It should be understood that the digital signature algorithm is not limited in this application.

For example, the trust manifest (trust manifest) records information indicating provenance of the media asset. The trust manifest is a part of the trust record. The trust manifest may alternatively be a type of metadata.

For example, the trust manifest may include a hard binding of (N+1)^{th} media content (for example, a second media hash value Media hash1). For example, media content obtained by performing editing processing on N^{th} media content based on an editing operation, or media content obtained by modifying metadata of N^{th} media content, or to-be-forwarded (or to-be-shared) N^{th} media content may be referred to as the (N+1)^{th} media content.

For example, the trust manifest may further include a media assertion (Assertion), and the media assertion may include copyright information, a thumbnail, whether modification is allowed, an operation permission, a use permission, provenance of second media content, and the like.

For example, the trust manifest may further include a second digital signature Signatureₛₖ₁, the second digital signature is a digital signature of second data, and the second data may be data determined based on at least the second media hash value and a modification assertion.

For example, the second data is data obtained by combining at least an (N+1)^{th} media hash value and an (N+1)^{th} assertion, or the first data is data obtained by combining at least a hash value (Assertion Hash) of an (N+1)^{th} assertion and a hash value of an (N+1)^{th} media hash value.

For example, the second data may alternatively be an (N+1)^{th} combined hash value, and the (N+1)^{th} combined hash value includes a hash value obtained by combining an (N+1)^{th} assertion and a hash value of an (N+1)^{th} media hash value. For example, the (N+1)^{th} combined hash value includes a hash value obtained by combining other descriptive information and the hash value that is obtained by combining the (N+1)^{th} assertion and the hash value of the (N+1)^{th} media hash value, and the other descriptive information may not be other descriptive information in the (N+1)^{th} assertion, for example, information about a tool for generating a trust manifest or other information describing the (N+1)^{th} assertion. This is not limited in this application.

For example, the second data may alternatively be an (N+1)^{th} combined hash value, and the (N+1)^{th} combined hash value may include a hash value obtained by combining a hash value of an (N+1)^{th} assertion and a hash value of an (N+1)^{th} media hash value (for example, the second media hash value Media Hash 1. Hash). For example, the (N+1)^{th} combined hash value is a hash value obtained by combining the hash value of the (N+1)^{th} assertion, the hash value of the (N+1)^{th} media hash value, and a hash value of other metadata information (Other Information).

For example, the trust manifest may further include a first uniform resource identifier (URI, Uniform Resource Identifier), and the first URI indicates a location of the initial information of the first media content or the hard binding of the first media content in a modification record of the first media content. For example, URI1 indicates a location of the hard binding of the first media content in the trust record of the first media content, URI2 indicates a location of a media type in the trust record of the first media content, URI3 indicates a location of AIGC in the trust record of the first media content, URI4 indicates a location of the (N+1)^{th} media content (for example, the second media hash value Media Hash 1) in the trust record, and URI5 indicates a location of the media assertion (Assertion) in the trust record.

For example, the modification record may further include other information, and the other information may be information that is not used to confirm authenticity of the media content, for example, a file name and a name of a hash algorithm. The hash algorithm is used to calculate the hash value mentioned in the foregoing embodiment.

The following describes a method procedure in embodiments of this application by using an example.

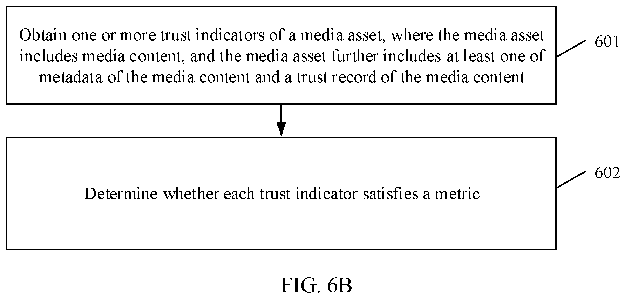

FIG. 6B shows a procedure of a data processing method according to an embodiment of this application. The procedure mainly describes a process of generating trustworthiness information. As shown in FIG. 6B, the data processing method provided in this embodiment of this application includes the following steps.

601: Obtain one or more trust indicators of a media asset, where the media asset includes media content, and at least one of metadata corresponding to the media content and a trust record corresponding to the media content.

For example, the trust indicator (trust indicator) is a parameter indicating a trustworthiness level of the media asset. In a possible implementation, the trust indicator of the media asset may be obtained from a trust credential, that is, the trust indicator of the media asset is encapsulated in the trust credential. In a possible implementation, the trust indicator may be obtained from the media asset, and a corresponding trust indicator is directly read from the media asset. In a possible implementation, the media asset includes at least one of the media content, the metadata corresponding to the media content, and the trust record corresponding to the media content. In this embodiment of this application, to enable a user to determine the trustworthiness level of the media asset, the one or more trust indicators related to the trustworthiness level of the media asset may be determined based on the media asset. The user can analyze and determine the trustworthiness level of the media asset based on a verification result of the trust indicator.

In a possible implementation, as shown in FIG. 7B, the media asset may include the media content and the metadata of the media content. The metadata of the media content is bound to the media content, or the metadata of the media content is associated with the media content. The metadata may include the trust record, or the metadata may not include the trust record, and the trust record and the metadata may be different parts of the media asset. In other words, as shown in FIG. 7B, the media asset may include the media content and the metadata corresponding to the media content (the trust record is encapsulated in the metadata), or as shown in FIG. 7A, the media asset may include the media content, the metadata corresponding to the media content, and the trust record corresponding to the media content.

In a possible implementation, the trust record may further be divided into a trust declaration (trust declaration) and several trust manifests (trust manifests). The trust manifest (trust manifest) is a set of media asset provenance information. The trust declaration (trust declaration) is a special type of trust manifest, and includes only a mandatory assertion (mandatory provenance information). The trust declaration (trust declaration) may appear at the 1^{st} place of the trust record (trust record).

In a possible implementation, the one or more trust indicators related to the trustworthiness level of the media asset may be determined based on the media asset. Specifically, as shown in FIG. 7A, the one or more trust indicators related to the trustworthiness level of the media asset may be determined based on at least one of the media content, the metadata corresponding to the media content, and the trust record corresponding to the media content. As shown in FIG. 7B, the one or more trust indicators related to the trustworthiness level of the media asset may be determined based on at least one of the media content and the metadata corresponding to the media content (the trust record is a part of the metadata).

For example, the trust indicator of the media asset may be a feature extracted from the media content, the metadata corresponding to the media content, and the trust record corresponding to the media content, or may be data obtained by performing specific processing on features in the media content, the metadata corresponding to the media content, and the trust record corresponding to the media content.

For example, one or more trust indicators TM related to the trustworthiness level of the media asset may be determined based on the metadata of the media content. For example, TM may be generation time of the media content, an author name of the media content, a digital content identifier of the media content, a generation location of the media content, information about a generation device of the media content, a media type (Media Type) of the media content, or a generation manner of the media content. For example, the information about the generation device of the media content may include a model of the device, a parameter of a camera, and the like; and the parameter of the camera may include a focal length, sensitivity, an exposure level, and the like of the camera during picture taking. It should be understood that TM may further include other information, for example, information used to describe the media content such as copyright information. This is not limited in this application.

For example, the one or more trust indicators related to the trustworthiness level of the media asset may be determined based on the metadata of the media content and the trust record of the media content.

For example, the one or more trust indicators related to the trustworthiness level of the media asset may be determined based on the metadata of the media content, the media content, and the trust record of the media content.

For example, one or more trust indicators TR related to the trustworthiness level of the media asset may be determined based on the trust record of the media content. For example, generation time of the media content, an author name of the media content, a digital content identifier of the media content, a generation location of the media content, information about a generation device of the media content, a media editing manner, a media type (Media Type) of the media content, or a generation manner of the media content in the trust record may be selected as the one or more trust indicators. For example, the information about the generation device of the media content may include a model of the device, a parameter of a camera, and the like; and the parameter of the camera may include a focal length, sensitivity, an exposure level, and the like of the camera during picture taking. It should be understood that TR may further include other information, for example, information used to describe the media content such as copyright information. This is not limited in this application. The media generation manner may include but is not limited to whether the media content is generated through AIGC, whether the media content is generated through a camera, whether the media content is generated with software assistance, whether the media content is generated through synthetic media, and whether the media content can be used to train a model. The media editing manner may include but is not limited to rotation, resizing, cropping, content editing, and the like. TR may further include a media assertion, and the media assertion may include a thumbnail, whether modification is allowed, an operation permission, a use permission, provenance of second media content, and the like.

For example, the one or more trust indicators related to the trustworthiness level of the media asset may be determined based on the media content and the trust record of the media content.

For example, one or more trust indicators TC related to the trustworthiness level of the media asset may be determined based on the media content. For example, features such as a person, a scene, an object type, a position relationship between objects, and a media style (for example, color, lighting, or luminance) in the media content may be selected as trust indicators of the media content.

For example, the one or more trust indicators related to the trustworthiness level of the media asset may be determined based on the metadata of the media content and the media content.

The trust indicator may be a feature description of the media asset. For example, the trust indicator may include a parameter indicating the trustworthiness level of the media asset.

In a possible implementation, the trust credential may include a relationship between each trust indicator and corresponding provenance, that is, the trust indicator corresponds to a specific part (metadata, a trust list, or media content) of the media asset. The trust credential (trust credential) is the one or more trust indicators obtained based on the media asset.

In a possible implementation, when a trust indicator is obtained, the trust indicator may be used as the trust credential. In a possible implementation, when a plurality of trust indicators are obtained, all of the trust indicators may be encapsulated to obtain the trust credential. In a possible implementation, the trust indicator and other data may alternatively be encapsulated together to obtain the trust credential.

In a possible implementation, for the one or more obtained trust indicators of the media asset, a corresponding requirement, namely, an assessment constraint on the trust indicator of the media asset in a specific scenario may be obtained. The assessment constraint may be considered as a constraint related to the trustworthiness level of the media asset.

In this embodiment of this application, the assessment constraint on the trust indicator of the media asset may be described by using a profile, and the profile may include a metric requirement corresponding to each trust indicator. The profile may also be referred to as a trust profile (trust profile). The trust profile records a set of specified trust metrics, and the set of trust metrics can be used to assess a trust credential of a specific media asset.

602: Determine whether the one or more trust indicators satisfy a metric.

In an implementation, the metric may be stored in a memory. When there is a need to assess trustworthiness of the media asset, the one or more trustworthy indicators of the media asset are obtained, and matching is performed between a trust indicator corresponding to the metric and the one or more trustworthy indicators of the media asset, to determine whether the one or more trust indicators satisfy the metric.

In an implementation, each metric specified in the trust profile is specific to a trust indicator. A corresponding trust indicator may be obtained from the media asset based on a metric specified in the profile, and trustworthiness information of the media asset may be obtained based on the trust profile and the one or more trust indicators of the media asset.

For example, the trust profile records trust profile information, and the trust profile information includes a metric that the media asset needs to satisfy. In other words, the trust profile information includes a metric that the trust credential needs to satisfy, and the trust profile information may be a set of trust indicators, used to assess the trust credential and indicating a trustworthiness level of the media asset.

In an implementation, a plurality of metrics of the media asset may be first obtained, and the plurality of metrics may include a metric other than a constraining metric in the profile. Therefore, satisfaction of each trust indicator against a metric may be determined based on the metric specified in a first profile, to obtain the trustworthiness information of the media asset.

In an implementation, the metric may be data obtained through processing based on a trust indicator, but the metric may indicate the corresponding trust indicator. That is, the metric may be a trust indicator of the media asset, a value of a trust indicator, or data obtained by performing specific processing on a trust indicator.

In an implementation, the metric may include one or more trust indicators, and whether the trust indicator in the metric is included in the one or more trust indicators of the media asset may be determined, to determine whether the one or more trust indicators of the media asset satisfy the metric.

In an implementation, whether the one or more trust indicators of the media asset include a trust indicator in the metric is determined, to determine whether the one or more trust indicators of the media asset satisfy the metric. In other words, when a trust indicator included in the trust profile is included in the trust indicator of the media asset, it may be considered that the trust indicator of the media asset satisfies the metric, or the trust indicator may be content of the metadata of the media asset or content of a modification record of the media asset, or a feature of the media content. As shown in FIG. 7A, metrics in the trust profile include TM1', TR1', TC1', and TM11', and TM1', TR1', TC1', and TM11' correspond to trust indicators TM1, TR1, TC1, and TM11. For example, TM1 is Shenzhen, Guangdong Province, and TM1' may be a location or China. In this case, TM1 satisfies the metric. Because TM11 does not exist in the one or more trust indicators of the media asset, TM11 does not satisfy the corresponding metric. In other words, when a trust indicator indicated by the metric in the trust profile information does not exist in the one or more trust indicators of the media asset, the media asset does not satisfy a metric requirement of the trust profile information. When the trust indicator of the media asset includes the trust indicator included in the trust profile, it may be considered that the trust indicator of the media asset satisfies the metric.

As shown in FIG. 7B, metrics in the trust profile include TM1', TM2', TM3', and TC1', and corresponding trust indicators TM1, TM2, TM3, and TC1 exist in the trust credential. In other words, when all trust indicators indicated by the metric in the trust profile information exist in the one or more trust indicators of the media asset, the media asset satisfies a metric requirement of the trust profile information.

In an implementation, the metric may include a determining condition, and the determining condition indicates whether a target trust indicator exists in the one or more trust indicators of the media asset. Whether the one or more trust indicators satisfy the determining condition may be determined, to determine whether the one or more trust indicators satisfy the metric. The trustworthiness information may be represented as a trust report. A result of assessing the trust credential based on the trust profile information is generated and recorded by using the trust profile and the trust credential as inputs. The assessment is assessment of a trustworthiness level of a given media asset. The result may be provided for the user as the trustworthiness information.

Subsequently, the trustworthiness information may be used to generate a new trust manifest (details are described in subsequent embodiments), or may be used as a file associated with the media asset.

The trustworthiness information may indicate satisfaction of one or more trust indicators of the media asset in the profile, and the user may determine the trustworthiness level of the media asset based on the trustworthiness information.

The foregoing describes the basic procedure of the method shown in FIG. 6B. The following describes specific implementations that may be used for some steps of the method shown in FIG. 6B by using examples.

In step 602, because different regions or different users may have different metric requirements for a same media asset, a plurality of profiles may be obtained. The plurality of profiles may be stored in a profile repository, and each profile is a metric requirement of one region or user for a media asset. Therefore, there are a plurality of possible specific implementations of obtaining the trustworthiness information of the media asset based on the profile and the trust indicator. The following provides descriptions by using examples with reference to implementations A to D.

Implementation A: There is only one set of metrics in the trust profile.

For trust indicators of the media asset, there may be only one set of metrics. In this case, whether the trust indicators of the media asset satisfy the set of metrics may be computed based on uniquely corresponding metric requirements, to obtain the trustworthiness information.

It should be understood that, because there is only one set of metric requirements, an association relationship between a metric of a trust indicator and a profile may not be stored in the trustworthiness information, that is, a specific region or a specific user whose metric requirements are used for obtaining the trustworthiness information is not indicated.

Implementation B: There are a plurality of trust profiles for the trust indicator, and for each trust profile, corresponding trustworthiness information is obtained through computing.

Because different regions or users have different requirements on a trustworthiness level, each trust profile includes a set of metrics, and different sets of metrics indicate metric requirements, of different regions or users, that the media asset needs to satisfy. In this case, satisfaction of the trust indicator against a plurality of metric requirements may be computed, to obtain a plurality of pieces of trustworthiness information.

It should be understood that an association relationship between a trust indicator and a corresponding metric requirement may be stored in the trustworthiness information, to help indicate a metric, of which region or which user, that the trustworthiness information is for.

Implementation C: There are a plurality of trust profiles, and for only a part of the trust profiles (for example, one trust profile), corresponding trustworthiness information is computed.

Different regions or users have different requirements on a trustworthiness level, and there may be a plurality of metric requirements for the trust indicator of the media asset (different metric requirements in the plurality of requirements correspond to different regions or different users). Therefore, when a system computes trustworthiness information, a user may specify computation of satisfaction of the trust indicator of the media asset against which set or a plurality of sets of metric requirements.

It should be understood that an association relationship between a trust indicator of a media asset and a corresponding metric requirement may be stored in the trustworthiness information, to help indicate a metric requirement, of which region or which user, that the trustworthiness information is for.

According to this application, in the foregoing implementation, different scenarios (for example, regions or users) may correspond to different metric requirements, and different pieces of trustworthiness information may be generated, so that trustworthiness level determining requirements of the different scenarios can be satisfied.

Implementation D: There may be a plurality of pieces of trust profile information for the trust indicator, different pieces of trust profile information indicate metric requirements, of different regions or users, that the media asset needs to satisfy, and the plurality of pieces of trust profile information may be stored in one trust profile or a plurality of trust profiles. The trustworthiness information of the media asset may be obtained based on the first profile information and the trust indicator of the media asset. The first profile information is one of the plurality of pieces of trust profile information.

After the trustworthiness information is obtained, the media asset may be updated by using the trustworthiness information. The following describes a specific implementation of updating the media asset by using the trustworthiness information.

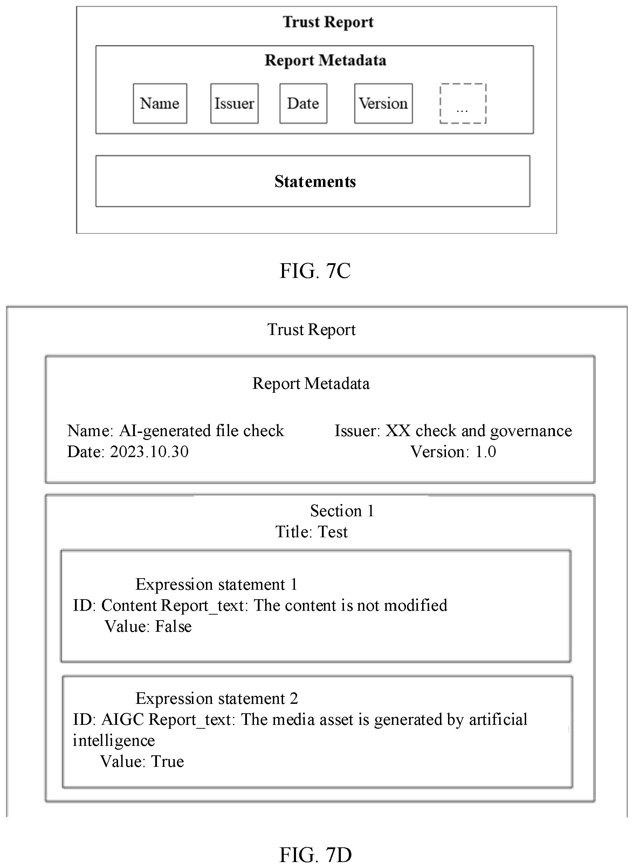

FIG. 7C shows a framework of a trust report according to this application.

In an implementation, the trust report includes report metadata and a report statement, the report metadata records information describing the trust report, the report metadata includes information extracted from a trust profile, and the report statement includes a statement of whether the trust credential satisfies a trustworthiness level requirement in the trust profile.

In an implementation, the report metadata includes a name, an issuer, an issue date, and a version number of the trust profile, that is, the report metadata includes metadata extracted from the trust profile.

In an implementation, there may be one or more report statements, and different expressions may be distinguished by using representation identifiers.

In an implementation, the report statement may include different sections (section), and the sections may record different report statements. When the representation statement is recorded by section, the report statement further includes a section identifier and a section title. The section identifier is used for a section in the trust report. The report statement may further include a description of a section or a description of a report statement in the section.

In an implementation, the report metadata may further include other information describing the report statement.

The following describes the trust report with reference to a specific example.

FIG. 7D shows a trust report of a picture generated based on AI.

In a section 1, a title is "Test"; an ID of a report statement 1 is "Content"; a hash value of media content that is expressed by the ID is consistent with a media hash value recorded in a trust credential; report content is "The media content is not modified"; and a value is "False". In other words, the report statement 1 indicates that the media content is modified. With reference to FIG. 7A, an example in which TM1 is the media hash value recorded in the trust credential is used, and TM1' is a hash value requirement of a media asset. For example, the requirement may be that a hash value of the media asset is consistent with the media hash value recorded in the trust credential.

An ID of a report statement 2 is AIGC, report content is that "The media asset is generated by artificial intelligence", and a value is "True". In other words, the report statement 2 indicates that the media asset is generated by artificial intelligence.

The report metadata is a name "AI-generated file check" of a profile, an issuer "XX check and governance" of the profile, a date "2023.10.30" of the profile, and a version "1.0" of the profile.

In an implementation, the report metadata may also include a report name and a report generation date.

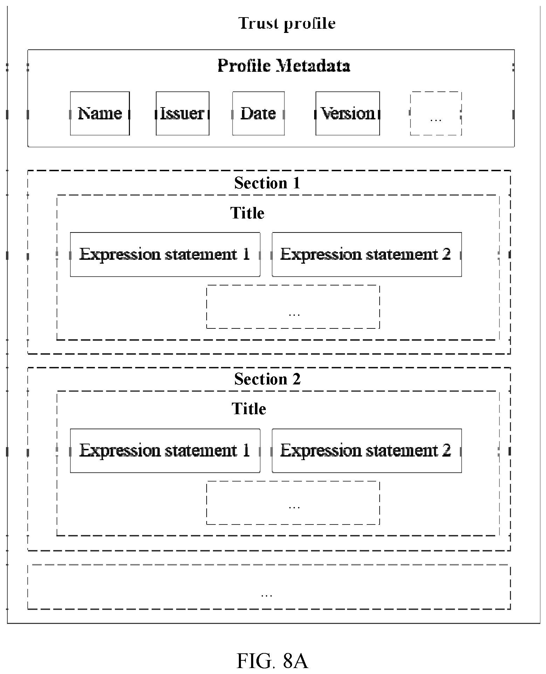

FIG. 8A shows a framework of a trust profile according to this application.

In an implementation, the trust profile may include profile metadata and a profile statement (statement). The profile metadata records information describing the trust profile, and the profile statement is used to record a statement about a trustworthiness level requirement of a media asset or a statement used to assess a trust credential.

In an implementation, the profile metadata may include a name, an issuer, an issue date, a version number, and the like of the trust profile. In some examples, the profile metadata may further include a language used by the trust profile.

In an implementation, the profile statement may include an expression (expression) or a formula. The expression or the formula may be used to assess the trust credential. For example, the formula or the expression indicates a requirement of a trust indicator in the trust credential, and the expression or the formula may use one or more trust indicators in the trust credential as an input, to output an assessment result. The assessment result is a binary, numeric (floating point), text (string), or URI index. The index may be internal (a JuMBF index) or external (a URL).

In an example, a type of a media asset is used as an example for description. The expression or the formula may be: The type of the media asset is an AIGC type. In other words, a requirement of the trust profile is that the type of the media asset needs to be the AIGC type. A media hash value is used as an example for description. The expression or the formula may be: A hash value of media content is equal to a media hash value in the trust indicator in the trust credential. In other words, when the hash value of the media content is equal to the media hash value in the trust indicator in the trust credential, the media content is not modified.

In some implementations, the trust profile may be expressed in a YAML format; the name, the issuer, and the version number of the trust profile may be expressed in a string type in the trust profile; and the expression or the formula may be expressed in a format of a JSON formula (JSON formula).

In an implementation, the profile statement may include a representation statement. The representation statement is used to record an assessment metric of trustworthiness level assessment, and the representation statement may include a representation identifier and an expression. The representation identifier is used to identify the representation statement of the trust profile, and the expression is used to assess the trust credential. In an implementation, the representation statement may further include a description of the representation statement, and the description may not be referenced by a trust report. In some implementations, the representation statement may further include report content. The report content may be referenced by the trust report, and the report content may record an explanation of an output result of the representation statement. It should be noted that there may be one or more representation statements, and different expressions may be distinguished by using representation identifiers.

In an implementation, the profile statement may include different sections (section), and the sections may record different representation statements. When the representation statement is recorded by section, the profile statement further includes a section identifier and a section title. The section identifier is used to identify a section in the trust profile, and the section title may be referenced by the trust report. The profile statement may further include a description of a section or a description of a representation statement in the section, and the description may not be referenced by the trust report.

The following describes the trust profile with reference to a specific example.

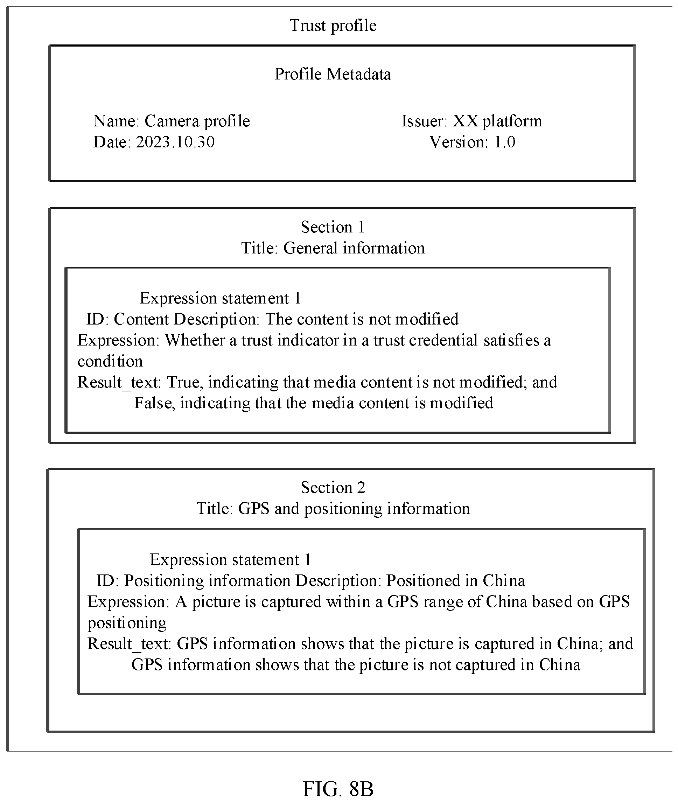

In an example, as shown in FIG. 8B, the trust profile is described by using a JPEG picture generated by a camera as an example. As shown in FIG. 8B, a name of the trust profile may be "Camera profile", a publisher of the profile may be "XX platform", publish time may be "2023.10.30", and a version number is "1.0". A profile statement of the camera includes two sections. A title of a section 1 is "General information", and the section 1 may include a representation statement 1; a representation identifier of the representation statement 1 may be "Content"; a description of the representation statement 1 may be "The content is not modified"; an expression of the representation statement 1 may be "Whether a trust indicator in a trust credential satisfies a condition"; and report content of the representation statement 1 may be "True" or "False", where "True" indicates that media content is not modified, and "False" indicates that the media content is modified. A title of a section 2 is "GPS and positioning information", and the section 2 may include a representation statement 1; a representation identifier of the representation statement 1 may be "Positioning information"; a description of the representation statement 1 may be "Positioned in China"; an expression of the representation statement 1 may be " A picture is captured within a GPS range of China based on GPS positioning"; and report content of the representation statement 1 may be "True" or "False", where "True" indicates that GPS information shows that the picture is captured in China, and "False" indicates that GPS information shows that the picture is not captured in China.

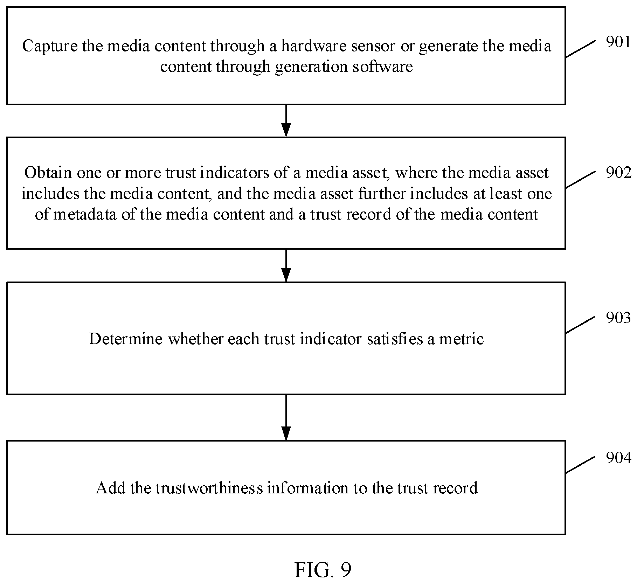

FIG. 9 shows a procedure of a data processing method according to an embodiment of this application.

901: Capture media content through a hardware sensor or generate media content through generation software.

A terminal device may capture the media content through the hardware sensor or generate the media content through software. For example, the terminal device may capture an image by using a camera built in the terminal device, or generate new media content through media content editing software (for example, through AIGC).

When obtaining media content, the terminal device further needs to generate a corresponding media asset through a media asset management module, and the media asset may include metadata, a trust record, and the like.

In this embodiment of this application, the media asset management module may capture the media content through the hardware sensor or generate the media content through the generation software, generate trustworthiness information based on the content in the media asset, and add the trustworthiness information to the media asset.

It should be understood that step 901 may be understood as an action before step 902. For example, step 901 may be a trigger condition of step 902 (optionally, step 901 may be one of a plurality of trigger conditions of step 902).

902: Obtain one or more trust indicators of a media asset, where the media asset includes the media content, and at least one of metadata corresponding to the media content and a trust record corresponding to the media content.

For descriptions of step 902, refer to the descriptions of step 601 in the foregoing embodiment. Similarities are not described herein again.

903: Determine whether each trust indicator satisfies a metric, to obtain trustworthiness information.

For descriptions of step 903, refer to the descriptions of step 602 in the foregoing embodiment. Similarities are not described herein again.

904: Add the trustworthiness information to the trust record.

During addition of the trustworthiness information to the trust record, the trustworthiness information may be added to an assertion (assertion).

Specifically, the trustworthiness information may be signed and then added to the assertion (assertion).

For example, trustworthiness information corresponding to one piece of media content may be signed and then added to the assertion as one of items of the assertion.

For example, satisfaction that corresponds to each metric or a part of metrics and that is in the trustworthiness information may be signed and then added to the assertion as one of items of the assertion.

Trustworthiness of the media asset can be further enhanced by adding the newly generated trustworthiness information to the trust record of the media asset.

In addition, a hash value of the trustworthiness information may further be added to a claim (claim) in a trust manifest.

In addition, a signature of the trustworthiness information may further be added to a signature in the trust manifest.

Based on FIG. 6B, FIG. 10 shows a procedure of a data processing method according to an embodiment of this application. Compared with FIG. 6B, the flowchart in FIG. 10 describes, by using a relationship between functional modules, a process of generating trustworthiness information and updating a media asset. The flowchart in FIG. 10 specifically includes:
a generation module, an extraction module, a trust profile storage module, and a verification module. The generation module is configured to generate a media asset, and each media asset includes three parts: metadata, media content, and a trust record. The extraction module, using the media asset as an input, extracts a trust metric from the metadata, the trust record, and the media content of the media asset, and generates a trust credential of the media asset based on the extracted trust metric. The trust profile storage module is responsible for storing a trust profile, and the trust profile is predefined by an entity such as a government, a platform, or a user for a specific scenario. The verification module, using the trust credential and the trust profile as inputs, assesses whether the trust metric in the trust credential satisfies the predefined trust profile. Finally, a trust report is generated based on a result of the assessment.

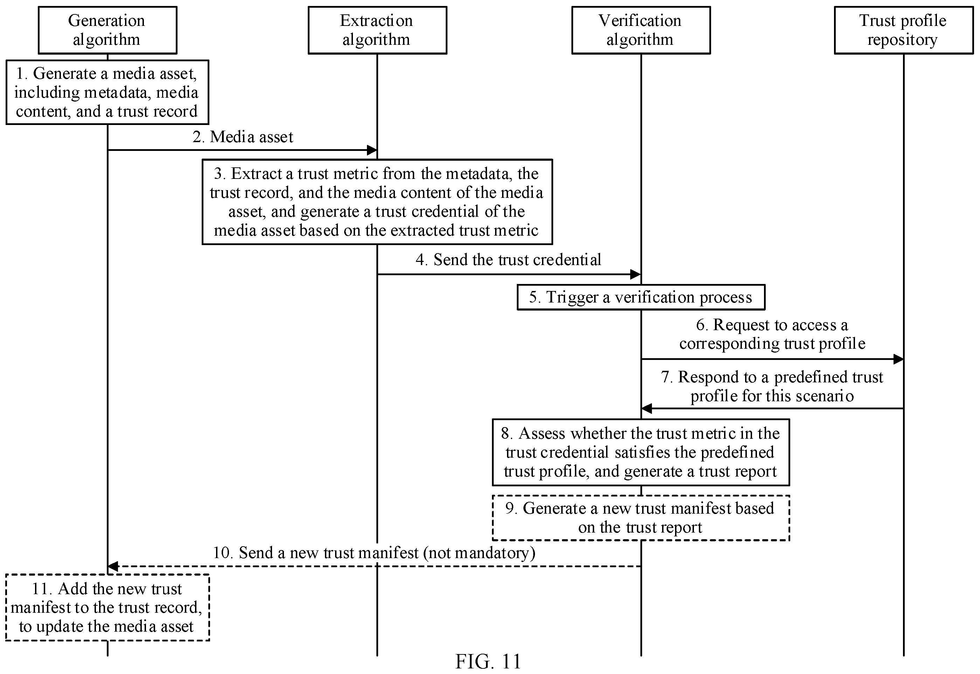

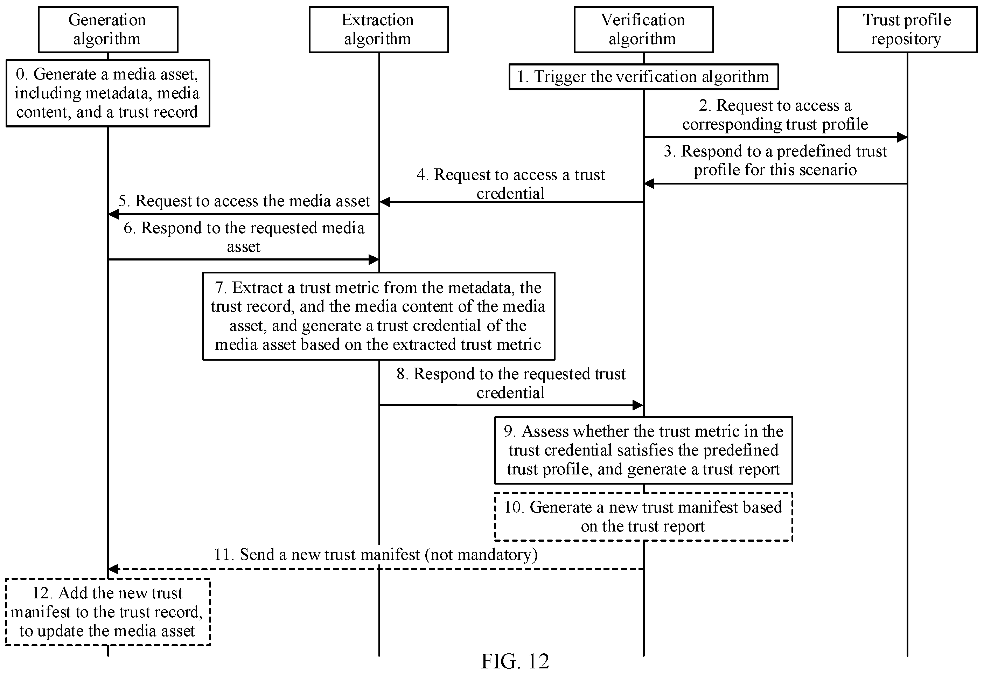

Based on FIG. 6B, FIG. 11 and FIG. 12 each show a procedure of a data processing method according to an embodiment of this application. Compared with FIG. 6B, the flowchart in FIG. 11 and the flowchart in FIG. 12 each describe, by using a relationship between functional modules, a process of generating trustworthiness information and updating a media asset. A difference between FIG. 11 and FIG. 12 lies in that a generation algorithm initiates the procedure in FIG. 11 while a verification algorithm initiates the procedure in FIG. 12.

FIG. 11 specifically includes the following steps:
1. The generation algorithm is configured to generate a media asset, where each media asset includes metadata, media content, and a trust record.
2. The generation algorithm passes the media asset to an extraction algorithm.
3. The extraction algorithm, using the media asset as an input, extracts a trust metric from the metadata, the trust record, and the media content of the media asset, and generates a trust credential of the media asset based on the extracted trust metric.
4. The extraction algorithm passes the trust credential to a verification algorithm.
5. The verification algorithm triggers a verification process.
6. The verification algorithm requests to obtain a trust profile from a trustworthiness file storage side, where the trust profile is predefined by an entity such as a government, a platform, or a user for a specific scenario.
7. The trustworthiness file storage side passes the trust profile to the verification algorithm.
8. The verification algorithm, using the trust credential and the trust profile as inputs, assesses whether the trust metric in the trust credential satisfies the predefined trust profile, and generates a trust report based on a result of the assessment.
9. The verification algorithm generates a new trust manifest based on the trust report.
10. The verification algorithm returns the trust manifest to the generation algorithm.
11. The generation algorithm adds the new trust manifest to the trust record, to update the media asset.

FIG. 12 specifically includes the following steps:
0. A generation algorithm is configured to generate a media asset, where each media asset includes metadata, media content, and a trust record.
1. The verification algorithm triggers a verification process.
2. The verification algorithm requests to obtain a trust profile from a trustworthiness file storage side, where the trust profile is predefined by an entity such as a government, a platform, or a user for a specific scenario.
3. The trustworthiness file storage side passes the trust profile to the verification algorithm.
4. The verification algorithm requests to obtain a trust credential from an extraction algorithm.
5. The extraction algorithm requests to obtain the media asset from the generation algorithm.
6. The generation algorithm passes the media asset to the extraction algorithm.
7. The extraction algorithm, using the media asset as an input, extracts a trust metric from the metadata, the trust record, and the media content of the media asset, and generates the trust credential of the media asset based on the extracted trust metric.
8. The extraction algorithm passes the trust credential to the verification algorithm.
9. The verification algorithm, using the trust credential and the trust profile as inputs, assesses whether the trust metric in the trust credential satisfies the predefined trust profile, and generates a trust report based on a result of the assessment.
10. The verification algorithm generates a new trust manifest based on the trust report.
11. The verification algorithm returns the trust manifest to the generation algorithm.
12. The generation algorithm adds the new trust manifest to the trust record, to update the media asset.

After trustworthiness information is obtained, a file associated with the media asset may be generated based on the trustworthiness information. The file may be used and viewed by the user, and used as a trustworthiness level determining basis during trustworthiness level determining. A description is given below.

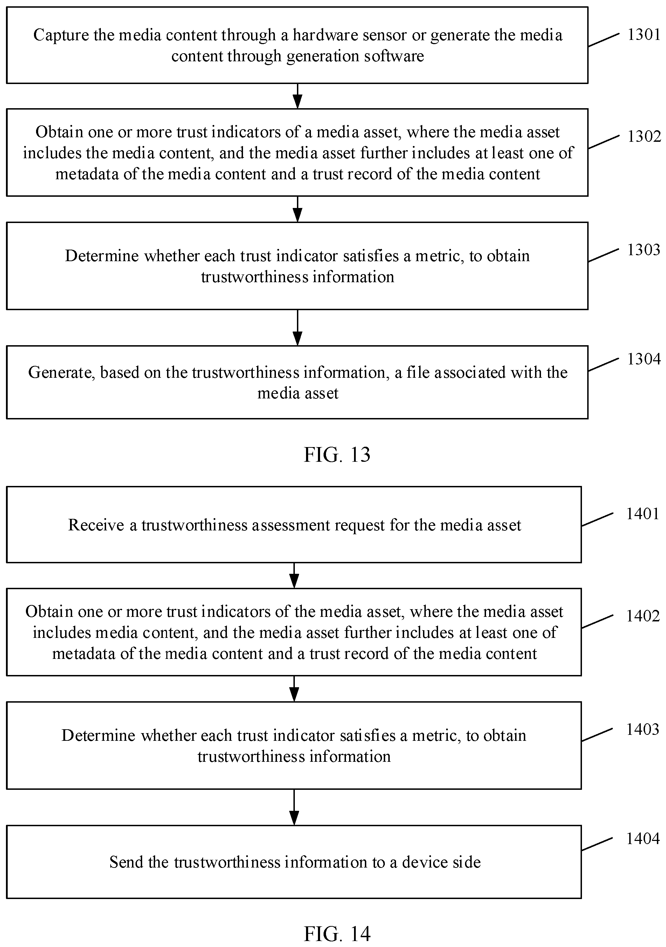

FIG. 13 shows a procedure of a data processing method according to an embodiment of this application. The method includes the following steps.

1301: Capture media content through a hardware sensor or generate media content through generation software.

For descriptions of step 1301, refer to the descriptions of step 901 in the foregoing embodiment. Similarities are not described herein again.

1302: Obtain one or more trust indicators of a media asset, where the media asset includes the media content, and at least one of metadata corresponding to the media content and a trust record corresponding to the media content.

For descriptions of step 1302, refer to the descriptions of step 902 in the foregoing embodiment. Similarities are not described herein again.

1303: Determine whether each trust indicator satisfies a metric, to obtain trustworthiness information.

For descriptions of step 1303, refer to the descriptions of step 903 in the foregoing embodiment. Similarities are not described herein again.

1304: Generate, based on the trustworthiness information, a file associated with the media asset.

The associated file may be an independently encapsulated file, and the file may be bound to the media asset. A user may determine a trustworthiness level of the media content by viewing the file.

In addition to automatic triggering by capturing the media content through a hardware sensor or generating the media content through generation software as described in FIG. 13, triggering of generation of the trustworthiness information may also be user-based active triggering. A description is given below.

FIG. 14 shows a procedure of a data processing method according to an embodiment of this application. The method includes the following steps.

1401: Receive a trustworthiness assessment request for a media asset.

For example, a user may input a trustworthiness assessment request for media content through a trustworthiness level determining application.

For example, a device side may input the trustworthiness assessment request for media content through an interface of a cloud service for providing a trustworthiness level determining service.

The request may carry the media asset.

1402: Obtain one or more trust indicators of the media asset, where the media asset includes media content, and at least one of metadata corresponding to the media content and a trust record corresponding to the media content.

For descriptions of step 1402, refer to the descriptions of step 902 in the foregoing embodiment. Similarities are not described herein again.

1403: Determine whether each trust indicator satisfies a metric, to obtain trustworthiness information.

For descriptions of step 1403, refer to the descriptions of step 903 in the foregoing embodiment. Similarities are not described herein again.

1404: Send the trustworthiness information to the device side.

In the foregoing embodiment, a process of generating trustworthiness information of one media asset is described. The following describes a process of generating trustworthiness information of a plurality of media assets in batches, which is described below.

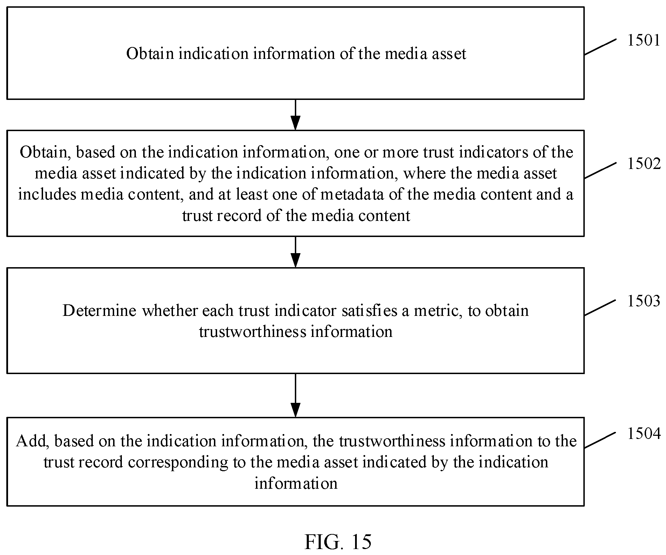

FIG. 15 shows a procedure of a data processing method according to an embodiment of this application. The method includes the following steps.

1501: Obtain indication information of a media asset.

For example, the indication information may be a media asset ID. Because this is a process of generating trust reports of a plurality of media assets in batches, there is a need to transmit corresponding media asset IDs.

1502: Obtain, based on the indication information, one or more trust indicators of the media asset indicated by the indication information, where the media asset includes media content, and at least one of metadata corresponding to the media content and a trust record corresponding to the media content.

1503: Determine whether each trust indicator satisfies a metric, to obtain trustworthiness information.

1504: Add, based on the indication information, the trustworthiness information to the trust record corresponding to the media asset indicated by the indication information.

Based on FIG. 15, FIG. 16A-1 and FIG. 16A-2 show a procedure of a data processing method according to an embodiment of this application. Compared with FIG. 15, the flowchart in FIG. 16A-1 and FIG. 16A-2 describe, by using a relationship between functional modules, a process of generating trustworthiness information in batches and updating media assets.

FIG. 16A-1 and FIG. 16A-2 specifically include the following steps:
1. A generation algorithm is configured to generate a media asset, where each media asset includes metadata, media content, and a trust record.
2. The generation algorithm sends, to an extraction algorithm, a request of generating a trust credential (including a media asset ID and a corresponding media asset).
3. The extraction algorithm, using the media assets as inputs, extracts a trust metric from the metadata, the trust record, and the media content of each media asset, and generates a trust credential of each media asset based on the extracted trust metric.
4. The extraction algorithm sends the trust credential in a format of (media asset ID, corresponding trust credential) to a verification algorithm.
5. The verification algorithm triggers a verification process.
6. The verification algorithm requests to obtain a trust profile from a trustworthiness file storage side, where the trust profile is predefined by an entity such as a government, a platform, or a user for a specific scenario.
7. The trustworthiness file storage side passes the trust profile to the verification algorithm.
8. The verification algorithm, using the trust credential and a trust profile that correspond to each media asset as inputs, assesses whether the trust metric in the trust credential corresponding to each media asset satisfies the predefined trust profile, and generates a trust report based on a result of the assessment. The verification algorithm generates a trust report for each media asset based on the result of the assessment.
9. The verification algorithm generates a new trust manifest for each media asset based on the trust report.
10. The verification algorithm returns the trust manifest in a format of (media asset ID, corresponding new trust manifest) to the generation algorithm.
11. The generation algorithm adds the new trust manifest to the trust record, to update the media asset.

FIG. 6B to FIG. 16A-1 and FIG. 16A-2 describe a process of generating or using trustworthiness information. The following describes a process of generating and using a trust credential with reference to the accompanying drawings.

FIG. 16B shows a procedure of a data processing method according to an embodiment of this application. The procedure mainly describes a process of generating trustworthiness information. As shown in FIG. 16B, the data processing method provided in this embodiment of this application includes the following steps.

S1601: Obtain a media asset, where the media asset includes media content, and at least one of metadata corresponding to the media content and a trust record corresponding to the media content.

For descriptions of S1601, refer to the descriptions related to the media asset in the foregoing embodiments. Similarities are not described herein again.

S1602: Determine one or more trust indicators of the media asset based on the media asset.

For descriptions of S1602, refer to the descriptions related to the trust indicator in the foregoing embodiments. Similarities are not described herein again.

The trust indicator may be encapsulated in a trust credential.

In a possible implementation, the trust credential may be further added to the trust record, to form a new trust record.

In a possible implementation, a file associated with the media asset may further be generated based on the trust credential.

The associated file may be an independently encapsulated file, and the file may be bound to the media asset. A user may determine a trustworthiness level of the media content by viewing the file.

The trust indicator of the media asset may be independently encapsulated into a new file by obtaining the trust indicator from the media asset. The file including the trust indicator may represent information about the trustworthiness level of the media asset. When the trustworthiness level of the media asset is verified, the trust indicator of the media asset may be directly read from the file that includes the trust indicator, to avoid privacy leakage caused by directly reading the media asset during trustworthiness level verification of the media asset.

FIG. 16C is a diagram of a trust record generation method. With reference to FIG. 6A, this embodiment provides a trust record generation method. Optionally, the trust record may also be metadata. The trust record generation method includes the following steps.

S161: Obtain first media content.

For example, the first media content may be media content generated by a first electronic device, or may be media content received by a first electronic device from another electronic device. For example, if the first media content is an image, the first media content may be an image captured by the first electronic device, a screenshot, an AI-generated image, or the like. A manner in which the first electronic device generates an image is not limited in this application. Alternatively, the first media content may be an image received by the first electronic device from another electronic device. This is not limited in this application.

S162: Generate a trust record of the first media content, where the trust record of the first media content includes initial information of the first media content, a hard binding of the first media content, and a first digital signature, the first digital signature is a digital signature of first data, and the first data is data determined based on at least the initial information and the hard binding of the first media content.

Explanations of the technical terms used in steps S161 and S162 are consistent with the explanations of the terms in the foregoing embodiments. Details are not described herein again.

FIG. 16D shows a data processing method. The data processing method in this embodiment includes the following steps.

S161D: Obtain a profile statement, where the profile statement herein may be input by a user, a platform, or an organization.

S162D: Obtain a trust profile based on the profile statement.

In an implementation, the profile statement and information about an issuer may be encapsulated to obtain the trust profile.

In an implementation, the issuer may generate a plurality of trust profiles, and separately store the plurality of trust profiles in a trust profile repository.

S163D: Store the trust profile, or send the trust profile.

In an implementation, a user A may obtain the trust profile from a user B, the platform, or the organization. When receiving, sent by the user A, a request of obtaining the trust profile, the user B, the platform, or the organization may send the trust profile to the user A. In an implementation, the user B, the platform, or the organization may obtain the trust profile from the trust profile repository, and then send the trust profile to the user A. In an implementation, the trust profile repository may store a plurality of trust profiles. A target trust profile required by the user A may be obtained from the trust profile repository. For example, the target trust profile may be a trust profile required by an area in which the user A is located, may be a trust profile required by the user A, or may be the trust profile required by the platform.

A trustworthiness level requirement of the media asset is recorded in the trust profile, which can help a platform, an organization, or a user manage the media asset. A trustworthiness level of the media asset is assessed by using the trust profile. Delivery of the trust profile helps the platform and the user verify the trustworthiness level of the media asset.

Explanations of the technical terms used in steps S161D to S163D are consistent with the explanations of the terms in the foregoing embodiments. Details are not described herein again.

The data processing method in this embodiment may further include: obtaining metadata of the trust profile, where a name of the trust profile may be entered by the platform, the organization, or the user, both an issuer and an issue date of the trust profile may be read from a system, and a version number may be entered by the user or automatically generated.

Further, the trust profile is generated based on the metadata of the trust profile, where the trust profile includes the metadata of the trust profile. The metadata and the profile statement of the trust profile may be encapsulated together to obtain the trust profile.

FIG. 16E shows a data processing method. The data processing method in this embodiment includes the following steps.

S161E: Obtain a trust credential and a trust profile, where the trust credential indicates a trustworthiness level of a media asset, and the trust profile indicates a trustworthiness level requirement of the media asset.

In an implementation, the trust profile may be obtained from a server or another device, or may be read locally. The trust credential may be obtained from another device, or may be sent by a user.

S162E: Generate a trust report based on the trust credential and the trust profile, where the trust report includes report metadata and a report statement, the report metadata records information describing the trust report, the report metadata includes information extracted from the trust profile, and the report statement includes a statement of whether the trust credential satisfies the trustworthiness level requirement in the trust profile.

S162E includes: S1621E: Read the trust indicator from the trust credential, and read the representation statement from the trust profile.

S1622E: Input the trust indicator of the trust credential into a formula or an expression of the representation statement to determine a conclusion about whether the trust indicator satisfies the trustworthiness level requirement.

S1623E: Generate the trust report based on the conclusion about whether the trust indicator satisfies the trustworthiness level requirement.

In an implementation, generating the trust report based on the trust profile includes: extracting information from profile metadata to generate the report metadata. In an example, the profile metadata in the trust profile may be directly read and copied to the trust report.

In this way, the trust report is generated based on the trust credential and the trust profile, and the media asset does not need to be read. Only information about the trustworthiness level needs to be read from the trust credential, and the trustworthiness level requirement needs to be read from the profile, to assess the trustworthiness level of the media asset. Metadata information of information about the trust profile is synchronously recorded in the trust report, or the trustworthiness level of the media asset may be determined further based on the information about the trust profile.

Explanations of the technical terms used in steps S161E and S162E are consistent with the explanations of the terms in the foregoing embodiments. Details are not described herein again.

FIG. 17 shows a structure of a data processing apparatus according to an embodiment of this application. The apparatus 1700 includes the following modules.

An obtaining module 1701 is configured to obtain one or more trust indicators of a media asset, where the media asset includes media content, and at least one of metadata corresponding to the media content and a trust record corresponding to the media content.

For specific descriptions of the obtaining module 1701, refer to the descriptions of step 601 in the foregoing embodiment. Details are not described herein again.

A processing module 1702 is configured to determine whether the one or more trust indicators satisfy a metric.

For specific descriptions of the processing module 1702, refer to the descriptions of step 602 in the foregoing embodiment. Details are not described herein again.

In a possible implementation, the obtaining module 1701 is further configured to:
obtain first trust profile information, where the first trust profile information includes a metric that the media asset needs to satisfy.

In a possible implementation, the one or more trust indicators are determined based on at least one of the media content, the metadata corresponding to the media content, and the trust record corresponding to the media content.

In a possible implementation, the one or more trust indicators are encapsulated in a trust credential.

In a possible implementation, the metric includes a trust indicator that the media asset needs to satisfy.

In a possible implementation, the processing module 1702 is specifically configured to:
determine whether a trust indicator in the metric is included in the one or more trust indicators, or determine whether the one or more trust indicators include a trust indicator in the metric.

In a possible implementation, the processing module 1702 is further configured to:
generate trustworthiness information of the media asset, where the trustworthiness information indicates whether the one or more trust indicators satisfy the metric, and the trust indicator includes a parameter indicating a trustworthiness level of the media asset. In a possible implementation, the processing module 1702 is further configured to:
add the trustworthiness information to the trust record.

In a possible implementation, the trust record includes a trust manifest; and
the processing module 1702 is specifically configured to:
add the trustworthiness information to the trust manifest.

In a possible implementation, the obtaining module 1701 is further configured to:
obtain indication information of the media asset; and
the processing module 1702 is specifically configured to:
   add, based on the indication information, the trustworthiness information to the trust record corresponding to the media asset indicated by the indication information.

In a possible implementation, the trustworthiness information is encapsulated in a trust report.

In a possible implementation, the processing module 1702 is further configured to:
generate, based on the trustworthiness information, a file associated with the media asset.

In a possible implementation, the first trust profile information includes one of a plurality of pieces of trust profile information, and different pieces of trust profile information indicate metric requirements, of different regions or users, that the media asset needs to satisfy.

In a possible implementation, the action of obtaining the one or more trust indicators of the media asset is triggered by capturing the media content through a hardware sensor or generating the media content through generation software.

In a possible implementation, before obtaining a plurality of metrics and a profile of the media asset, the obtaining module 1701 is further configured to:
receive a trustworthiness assessment request for the media content.

In a possible implementation, the media content is at least one of an image, a video, or audio.

In addition, an embodiment of this application further provides a data processing apparatus, and the apparatus includes the following modules.

An obtaining module 1701 is configured to obtain a media asset, where the media asset includes media content, and at least one of metadata corresponding to the media content and a trust record corresponding to the media content.

For specific descriptions of the processing module 1701, refer to the descriptions of step 1601 in the foregoing embodiment. Details are not described herein again.

A processing module 1702 is configured to determine one or more trust indicators of the media asset, where the one or more trust indicators are used to assess a trustworthiness level of the media asset.

For specific descriptions of the processing module 1702, refer to the descriptions of step 1602 in the foregoing embodiment. Details are not described herein again.

In a possible implementation, the one or more trust indicators are encapsulated in a trust credential.

In a possible implementation, the one or more trust indicators are determined based on at least one of the media content, the metadata corresponding to the media content, and the trust record corresponding to the media content.

In a possible implementation, the one or more trust indicators are used to determine trustworthiness information of the media asset, and the trustworthiness information indicates whether the one or more trust indicators satisfy a metric.

In a possible implementation, the metric includes a trust indicator that the media asset needs to satisfy.

In a possible implementation, the trust indicator includes a parameter indicating the trustworthiness level of the media asset.

In a possible implementation, the media content is at least one of an image, a video, or audio.

In addition, an embodiment of this application further provides a data processing apparatus, and the apparatus includes:
an obtaining module 1701, configured to obtain a trust credential and a trust profile, where the trust credential indicates a trustworthiness level of a media asset, and the trust profile indicates a trustworthiness level requirement of the media asset; and
a processing module 1702, configured to generate a trust report based on the trust credential and the trust profile, where the trust report includes report metadata and a report statement, the report metadata records information describing the trust report, the report metadata includes information extracted from the trust profile, and the report statement includes a statement of whether the trust credential satisfies the trustworthiness level requirement in the trust profile.

In an implementation, the processing module 1702 is further configured to:
read the trust indicator from the trust credential, and read the representation statement from the trust profile;
input the trust indicator of the trust credential into a formula or an expression of the representation statement to determine a conclusion about whether the trust indicator satisfies the trustworthiness level requirement; and
generate the trust report based on the conclusion about whether the trust indicator satisfies the trustworthiness level requirement.

The processing module 1702 is further configured to store and/or send the trust report.

In addition, an embodiment of this application further provides a data processing apparatus, and the apparatus includes:
an obtaining module 1701, configured to obtain a profile statement, where the profile statement indicates a trustworthiness level requirement that a media asset needs to satisfy; and
a processing module 1702, configured to generate a trust profile based on the profile statement, where the trust profile includes the profile statement, the profile statement includes a representation statement, the representation statement includes a formula or an expression, the formula or the expression indicates a requirement of a trust indicator in a trust credential, and the trust indicator is a parameter indicating a trustworthiness level of the media asset.

In an implementation, the obtaining module 1701 further obtains metadata of the trust profile; and
the processing module 1702 generates the trust profile further based on the metadata, where the trust profile further includes the metadata, and the metadata includes a name, an issuer, an issue date, and a version number of the trust profile.

In an implementation, the processing module 1702 further receives a request from a user, where the request is used to obtain the trust profile; and sends the trust profile to the user.

In an implementation, the processing module 1702 further obtains a target trust profile from a profile repository in response to the request of the user, where the profile repository includes a plurality of trust profiles, and the target profile is a trust profile corresponding to the user; and
sending the trust profile to the user includes: sending the target trust profile to the user.

In an implementation, the processing module 1702 further stores the trust profile.

The following describes an execution device provided in an embodiment of this application. FIG. 18 is a diagram of a structure of an execution device according to an embodiment of this application. The execution device 1800 may be specifically represented as a mobile phone, a tablet computer, a notebook computer, a smart wearable device, or the like. This is not limited herein. Specifically, the execution device 1800 includes a receiver 1801, a transmitter 1802, a processor 1803, and a memory 1804 (there may be one or more processors 1803 in the execution device 1800, and one processor is used as an example in FIG. 18). The processor 1803 may include an application processor 18031 and a communication processor 18032. In some embodiments of this application, the receiver 1801, the transmitter 1802, the processor 1803, and the memory 1804 may be connected through a bus or in another manner.

The memory 1804 may include a read-only memory and a random access memory, and provide instructions and data for the processor 1803. A part of the memory 1804 may further include a non-volatile random access memory (non-volatile random access memory, NVRAM). The memory 1804 stores processor and operation instructions, an executable module or a data structure, a subset thereof, or an extended set thereof. The operation instructions may include various operation instructions for implementing various operations.

The processor 1803 controls an operation of the execution device. During specific application, the components of the execution device are coupled together through a bus system. In addition to a data bus, the bus system may further include a power bus, a control bus, a status signal bus, and the like. However, for clear description, various types of buses in the figure are referred to as the bus system.

The methods disclosed in the foregoing embodiments of this application may be applied to the processor 1803, or implemented by the processor 1803. The processor 1803 may be an integrated circuit chip and has a signal processing capability. In an implementation process, the steps of the foregoing method may be completed by a hardware integrated logic circuit in the processor 1803 or by using instructions in a form of software. The processor 1803 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1803 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1804, and the processor 1803 reads information in the memory 1804, and completes the steps in the foregoing methods in combination with hardware of the processor 1803.

The receiver 1801 may be configured to receive input digit or character information, and generate a signal input related to a related setting and function control of the execution device. The transmitter 1802 may be configured to output the digit or character information. The transmitter 1802 may be further configured to send an instruction to a disk group, to modify data in the disk group.

In this embodiment of this application, in one case, the processor 1803 is configured to perform the steps of the data processing methods in the embodiments corresponding to FIG. 6B to FIG. 16A-1 and FIG. 16A-2.

An embodiment of this application further provides a server. FIG. 19 is a diagram of a structure of a server according to an embodiment of this application. Specifically, the server 1900 is implemented by one or more servers. The server 1900 may greatly differ due to different configurations or performance, and may include one or more central processing units (central processing units, CPUs) 1919 (for example, one or more processors) and a memory 1932, one or more storage media 1930 (for example, one or more mass storage devices) that store an application 1942 or data 1944. The memory 1932 and the storage medium 1930 may be used for temporary storage or persistent storage. A program stored in the storage medium 1930 may include one or more modules (not shown in the figure), and each module may include a series of instruction operations for the server. Further, the central processing unit 1919 may be configured to: communicate with the storage medium 1930, and perform, on the server 1900, the series of instruction operations in the storage medium 1930.

The server 1900 may further include one or more power supplies 1919, one or more wired or wireless network interfaces 1950, one or more input/output interfaces 1958, or one or more operating systems 1941, for example, Windows Server^{™}, Mac OS X^{™}, Unix^{™}, Linux^{™}, and FreeBSD^{™}.

In this embodiment of this application, the central processing unit 1919 is configured to perform the steps of the data processing methods in the embodiments corresponding to FIG. 6B to FIG. 16A-1 and FIG. 16A-2.

An embodiment of this application further provides a computer program product including computer-readable instructions. When the computer-readable instructions are run on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program for signal processing. When the program is run on a computer, the computer is enabled to perform the steps performed by the foregoing execution device, or the computer is enabled to perform the steps performed by the foregoing training device.

In addition, it should be noted that the apparatus embodiments described above are merely examples. The units described as separate parts may or may not be physically separate, and parts displayed as units may or may not be physical units, may be located in one place, or may be distributed on a plurality of network units. A part or all of the modules may be selected based on actual needs to achieve objectives of the solutions in embodiments. In addition, in the accompanying drawings of the apparatus embodiments provided in this application, connection relationships between modules indicate that modules have communication connections with each other, which may be specifically implemented as one or more communications buses or signal cables.

Based on the description of the foregoing implementations, a person skilled in the art may clearly understand that this application may be implemented by software in combination with necessary universal hardware, or certainly may be implemented by special-purpose hardware, including an application-specific integrated circuit, a special-purpose CPU, a special-purpose memory, a special-purpose component, and the like. Usually, any functions that are performed by a computer program can be easily implemented by using corresponding hardware. Moreover, there may be various specific hardware structures, such as analog circuits, digital circuits, or dedicated circuits, used to achieve a same function. However, in this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or a part of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1. A data processing method, wherein the method comprises:
obtaining a profile statement, wherein the profile statement indicates a trustworthiness level requirement that a media asset needs to satisfy; and
generating a trust profile based on the profile statement, wherein the trust profile comprises the profile statement, the profile statement comprises a formula or an expression, the formula or the expression indicates a requirement of a trust indicator in a trust credential, and the trust indicator is a parameter indicating a trustworthiness level of the media asset.

2. The data processing method according to claim 1, wherein the formula or the expression is expressed in a format of a JSON formula.

3. The data processing method according to claim 1, wherein the method further comprises:
obtaining metadata of the trust profile; and
generating the trust profile further based on the metadata, wherein the trust profile further comprises the metadata, and the metadata comprises a name, an issuer, an issue date, and a version number of the trust profile.

4. The data processing method according to claim 3, wherein the name, the issuer, and the version number of the trust profile are expressed in a string type in the trust profile.

5. The data processing method according to any one of claims 1 to 4, wherein the trust profile is expressed in a YAML format.

6. The data processing method according to claim 2, wherein the media asset comprises media content, the media asset further comprises at least one of metadata of the media content and a trust record of the media content, and the one or more trust indicators are determined based on at least one of the media content, the metadata corresponding to the media content, and the trust record corresponding to the media content.

7. The data processing method according to claim 1, wherein the method further comprises:
receiving a request from a user, wherein the request is used to obtain the trust profile; and
sending the trust profile to the user.

8. The data processing method according to claim 7, wherein the method further comprises:
obtaining a target trust profile from a profile repository in response to the request of the user, wherein the profile repository comprises a plurality of trust profiles, and the target profile is a trust profile corresponding to the user; and
sending the trust profile to the user comprises: sending the target trust profile to the user.

9. The data processing method according to claim 1, wherein the method further comprises: storing the trust profile.

10. A data processing apparatus, comprising:
an obtaining module, configured to obtain a profile statement, wherein the profile statement indicates a trustworthiness level requirement that a media asset needs to satisfy; and
a processing module, configured to generate a trust profile based on the profile statement, wherein the trust profile comprises the profile statement, the profile statement comprises a formula or an expression, the formula or the expression indicates a requirement of a trust indicator in a trust credential, and the trust indicator is a parameter indicating a trustworthiness level of the media asset.

11. The data processing apparatus according to claim 10, wherein
the processing module is further configured to receive a request from a user, wherein the request is used to obtain the trust profile; and
the processing module is further configured to send the trust profile to the user.

12. The data processing apparatus according to claim 10, wherein
the obtaining module is further configured to obtain metadata of the trust profile; and
the processing module generates the trust profile further based on the metadata, wherein the trust profile further comprises the metadata, and the metadata comprises a name, an issuer, an issue date, and a version number of the trust profile.

13. A data processing apparatus, wherein the apparatus comprises a memory and a processor, the memory stores code, and the processor is configured to obtain the code and perform the method according to any one of claims 1 to 9.

14. A computer-readable storage medium, comprising computer-readable instructions, wherein when the computer-readable instructions are run on a computer device, the computer device is enabled to perform the method according to any one of claims 1 to 9.

15. A computer program product, comprising computer-readable instructions, wherein when the computer-readable instructions are run on a computer device, the computer device is enabled to perform the method according to any one of claims 1 to 9.
